# EUROPEAN PATENT APPLICATION

(11) **EP 1 852 816 A1**
(43) Date of publication of application: **07.11.2007**
(21) Application number: 06712974.2
(22) Date of filing: 03.02.2006
(51) Int. Cl.: G06Q 20/00, G06F 21/20, G06Q 30/00

(54) **NETWORK SETTLING CARD, NETWORK SETTLING PROGRAM, AUTHENTICATION SERVER, AND SHOPPING SYSTEM AND SETTLING METHOD**

(30) Priority: 04.02.2005 JP 2005029867; 01.12.2005 JP 2005347925
(71) Applicant: Secured Communications, Inc., Kawasaki-shi, Kanagawa 211-0005 (JP)
(72) Inventor: OKAWA, Katsuyoshi, hida-shi, Tokyo, 1950055 (JP)
(74) Representative: Grünecker, Kinkeldey, Stockmair & Schwanhäusser Anwaltssozietät
(86) International application number: PCT/JP2006/301831
(87) International publication number: WO 2006/082913

(57) **Abstract**

There are provided a network settling card and a network settling program, which can perform a settling procedure on a commodity selected by a user, in a shopping system through a network or in an actual shop, even if the card information and the personal information of the user and so on are not notified, as well as an authentication server, and a shopping system and a settling method. The network settling card includes an authentication processing unit for performing authentication using an authentication key created on the basis of the information of a card to be used in a settling procedure. The authentication processing unit performs the settling procedure on the commodity selected by the user by creating a one-time ID by an authentication key, by acquiring a one-time ID created by an authentication server for authenticating the one-time ID, and by authenticating the authentication server by the authentication key.

## Description

### Field of the Invention

The present invention relates to a shopping system in which a user selects and purchases a commodity provided by a server through a network. More particularly, the invention relates to a network settling card used by a user when using a shopping system, and to an authentication server for identifying the information of a card to be used by the user in a settling procedure.

### Related Art

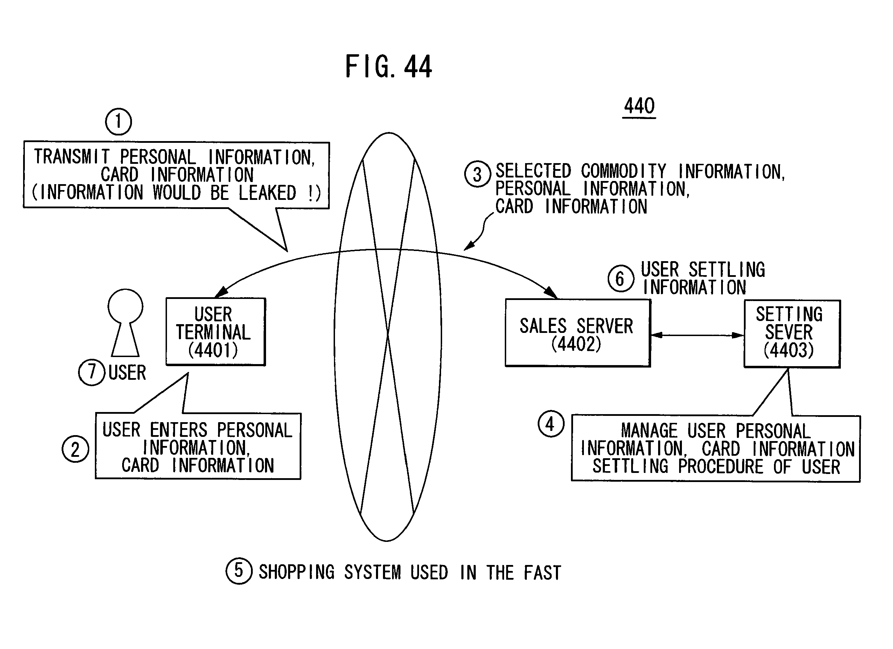

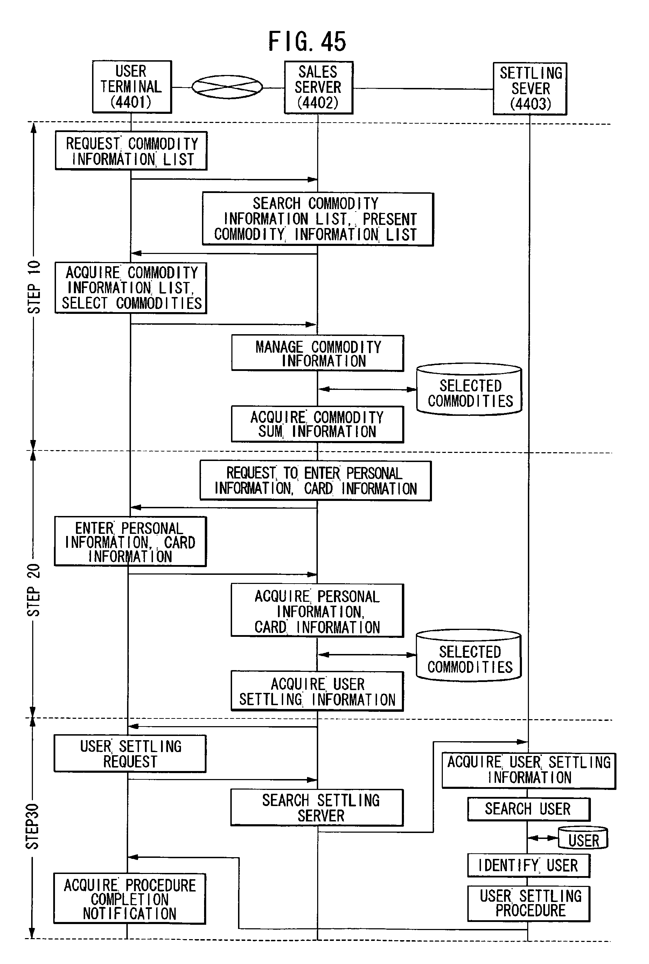

Heretofore, there has been known a shopping system in which the server side sells commodities through a network. As shown in Fig. 44, the configuration of a shopping system 440 is roughly divided into the user side including a user terminal 4401, and the server side including a sales server 4402 and a settling server 4403, through a network. Further as shown in Fig. 45, the flow of the processing in the shopping system is roughly divided into the following steps including: a step 10 in which a user selects a commodity and notifies the server side of his or her purchase intention; a step 20 in which the user selects the settling method and notifies the server side of personal information and card information; and a step 30 in which a settling procedure is performed on the server side.

When a user purchases a commodity by the shopping system, the user needs to perform a settling procedure on the commodity. The settling method includes the use of a credit card the user has, in addition to cash on delivery (COD), transfer to designated account, and the like. The user selects one of the settling methods and notifies the sales server 4402. When the user selects the credit card and notifies the sales server 4402, the sales server 4402 requests the user terminal 4401 to enter the information of the credit card the user has, as well as the personal information of the user. In response to the request, the user enters the credit card information such as the company name, card ID, and password of the credit card, as well as the user personal information such as the name, age, address, telephone number, e-mail address of the user, through the user terminal 4401. The user transmits such information from the user terminal 4401 to the sales server 4402. The sales server 4402 manages the commodity selected by the user, and acquires the user settling information by receiving the information of the credit card the user and the user personal information, which were entered by the user. Then, in response to the settling procedure request from the user terminal 4401, the sales server 4402 refers to the acquired credit card information, searches the settling server 4403 controlled by the relevant card company, and transmits the acquired user settling information. The settling server 4403 performs the settling procedure on the commodity to be purchased, by identifying the user from the information managed by the relevant server, on the basis of the credit card information and personal information of the received user settling information (see Patent document 1: JP-A No. 240814/1998).

### SUMMARY OF THE INVENTION

However, in the case of the settling procedure in which the user selects the credit card in the shopping system as described above, it is cumbersome to enter the credit card information such as "Credit card company name", "Card ID", and "Password", as well as the user personal information such as "User name", "Age", "Address", "Telephone number", and "E-mail address". In addition, the user may suffer significant losses when the entered information is leaked or stolen on the network and is used by someone impersonating a third party. These problems lead to a problem of lack of usability and safety in the use of the credit card on the network.

The present invention focuses on such problems, and is to provide a network settling card and a network settling program, which can perform a settling procedure on a commodity selected by a user in a shopping system through a network or in an actual shop, even if the card information, personal information, and the like of the user are not notified, as well as to provide an authentication server, and a shopping system and a settling method.

A network settling card according to the present invention includes an authentication processing unit for performing authentication using an authentication key created on the basis of the information of a card to be used in a settling procedure. The authentication processing unit performs a settling procedure on a commodity selected by a user, by creating a one-time ID by the authentication key, by acquiring a one-time ID created by an authentication server for authenticating the one-time ID, and by authenticating the authentication server by the authentication key.

Further the network settling program according to the present invention is executed by a computer, for performing authentication using an authentication key created on the basis of the information of a card to be used in a settling procedure, creating a one-time ID by the authentication key, acquiring a one-time ID created by an authentication server for authenticating the one-time ID, and authenticating the authentication server by the authentication key.

Further the settling method according to the present invention includes the following steps of: performing communication between a user terminal and a server, and causing a user to select a commodity displayed in the user terminal; displaying a method of a settling procedure on the selected commodity, and causing the user to select therefrom; when the user selects a network settling card or a network settling program for the method of the settling procedure, causing the network settling card or the network settling program to be read; causing the user to select a card company usable in the settling procedure, from selectable card companies managed in the server and from selectable card companies managed in the network settling card or in the network settling program; displaying a request to perform authentication with the server, and causing the user to execute the request; and displaying a request to perform settling procedure processing with the server, and causing the user to execute the request. Upon execution of the authentication processing, the network settling card or the network settling program creates a one-time ID by an authentication key created on the basis of the information of the card to be used in the settling procedure, and transmits the created one-time ID to the server. The server identifies the information of the card to be used by the user in the settling procedure by authenticating the transmitted one-time ID by the authentication key created on the basis of the card information. Then the server creates a one-time ID by the authentication key that was used for the authentication, and transmits the created one-time ID to the user terminal. Thus bidirectional one-time ID authentication processing is performed.

Further another settling method according to the present invention includes the following steps of: performing communication between a shop terminal and a server, and causing the shop terminal to read a network settling card for performing a settling procedure on a commodity selected by a user; causing the user to select a card company usable in the settling procedure, from selectable card companies managed in the server and from selectable card companies managed in the network settling card; displaying a request to perform authentication with the server, and causing the user to execute the request; and displaying a request to perform settling procedure processing with the server, and causing the user to execute the request. Upon execution of the authentication processing, the network settling card or the network settling program creates a one-time ID by an authentication key created on the basis of the information of the card to be used in the settling procedure, and transmits the created one-time ID to the server. The server identifies the information of the card to be used by the user in the settling procedure by authenticating the transmitted one-time ID by the authentication key created on the basis of the card information. Then the server creates a one-time ID by the authentication key that was used for the authentication, and transmits the created one-time ID to the shop terminal. Thus bidirectional one-time ID authentication processing is performed.

Further an authentication server according to the present invention includes: a commodity sum information management unit for acquiring the sum information of a commodity selected by a user in a user terminal in a shopping system through a network, from a sales server for selling commodities; a user card authentication processing unit for authenticating the information of a card to be used by the user in a settling procedure, with respect to a one-time ID transmitted from the user terminal, using an authentication key created on the basis of the card information; and a user settling procedure controller for performing the settling procedure by acquiring the user settling information from the acquired sum information of the commodity and from the authenticated information of the card to be used by the user in the settling procedure.

Further a sopping system according to the present invention includes: a network settling card or a network settling program for performing a settling procedure on a commodity selected by a user; a terminal for reading the network settling card or the network settling program to perform communication through a network; an authentication server for communicating with the terminal, receiving a one-time ID created by the network settling card or by the network settling program as well as the sum information of the commodity selected by the user, acquiring the information of the card to be used by the user in the settling procedure on the basis of the one-time ID, and acquiring the user settling information including the commodity sum information and the card information; and a settling server for performing the settling procedure on the commodity selected by the user by acquiring the user settling information from the authentication server. After authentication of the information of the card to be used by the user in the settling procedure from the one-time ID, the authentication server creates a one-time ID by an authentication key that was used for the authentication, and transmits the created one-time ID to the network settling card or the network settling program through the terminal. The network settling card or the network settling program authenticates the authentication server, and then requests the authentication server to perform the settling procedure on the commodity through the terminal.

Further another shopping system according to the present invention includes: a network settling card for performing a settling procedure on a commodity selected by a user; a shop terminal for reading the network settling card to perform communication through a network; an authentication sever for communicating with the shop terminal, receiving a one-time ID created by the network settling card as well as the sum information of the commodity selected by the user from the shop terminal, acquiring the information of the card used by the user in the settling procedure on the basis of the one-time ID, and acquiring the user settling information including the commodity sum information and the card information; and a settling server for performing the settling procedure on the commodity selected by the user by acquiring the user settling information from the authentication server. After authentication of the information of the card used by the user in the settling procedure from the one-time ID, the authentication server creates a one-time ID by an authentication key that was used for the authentication, and transmits the created one-time ID to the network settling card through the shop terminal. After authentication of the authentication server, the network settling card requests the authentication server to perform the settling procedure on the commodity through the shop terminal.

As described above, according to the present invention, the user side can create a one-time ID without entering the card information, personal information, and the like of the user while the server side can authenticate the information of a card to be used by the user in a settling procedure by authenticating the one-time ID. This saves the trouble of notifying the card information, personal information, and the like of the user. Further such information is not leaked or stolen on the network, so that the user can use the system with ease and confidence. Even if the one-time ID is leaked or stolen on the network and such a one-time ID is used, it is possible to prevent impersonation. Further by performing the bidirectional one-time ID authentication that authenticates not only the user card information on the server side but also the server on the user side, it is possible to mutually verify the validity on the user side and the server side, thereby making it possible to protect information on both sides.

Further according to the present invention, it is possible not only to use the shopping system through the network, but also to perform a settling procedure on a commodity selected by a user in an actual shop, without notifying the card information, personal information, and the like of the user.

### BRIEF DESCRIPTION OF THE DRAWINGS

Fig. 1 is a view showing a shopping system used in an embodiment of the present invention;
Fig. 2 is a diagram showing an internal configuration of a network settling card used in an embodiment of the present invention;
Fig. 3 is a diagram showing an internal configuration of an authentication server used in an embodiment of the present invention;
Fig. 4 is a view showing the flow of purchase commodity selection processing which is processing of the shopping system;
Fig. 5 is a view showing the flow of user card authentication processing which is processing of the shopping system;
Fig. 6 is a view showing the flow of settling procedure processing which is processing of the shopping system;
Fig. 7 is a view showing the flow of confirmation processing of settling procedure completion information which is processing of the shopping system;
Fig. 8 is a view showing the flow of the confirmation processing of settling procedure completion information which is processing of the shopping system;

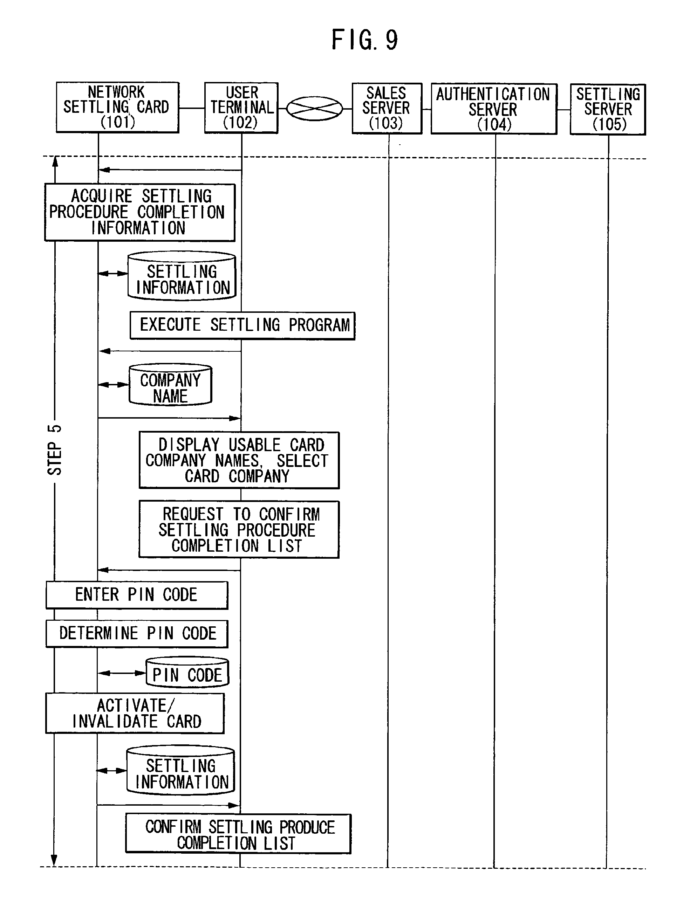

Fig. 9 is a view showing the flow of other confirmation processing of settling procedure completion information which is processing of the shopping system;
Fig. 10 is a view showing an issue configuration of the network settling card;
Fig. 11 is a view showing an issue configuration of the network settling card;
Fig. 12 is a view showing an issue configuration of the network settling card;
Fig. 13 is a view showing a configuration in which the authentication server is controlled by a card company;
Fig. 14 is a view showing a configuration in which the authentication server is controlled by a card company or a network settling card issuing company;
Fig. 15 is a view showing a configuration in which the authentication server is controlled by a network settling card issuing company;
Fig. 16 is a view showing commodity information displayed on a screen of the user terminal, and a data structure managed by a sales server;
Fig. 17 is a view showing information of commodities selected by the user, which is displayed on the screen of the user terminal, as well as a data structure managed by the sales server;
Fig. 18 is a view showing the settling method and the card information usable in the settling procedure, which are displayed on the screen of the user terminal, as well as a data structure managed by the sales server;
Fig. 19 is a view showing a configuration for displaying the card information usable in the settling procedure, on the screen of the user terminal;
Fig. 20 is a view showing a configuration for displaying the card information usable in the settling procedure, on the screen of the user terminal;
Fig. 21 is a view showing a configuration for displaying the card information usable in the settling procedure, on the screen of the user terminal;
Fig. 22 is a view showing a configuration for displaying the card information usable in the settling procedure, on the screen of the user terminal;
Fig. 23 is a view showing a data structure transmitted from the sales saver to the authentication server;
Fig. 24 is view showing a configuration for displaying a request to enter a pin code on the screen of the user terminal;
Fig. 25 is a view showing a configuration for displaying a request to enter a pin code on the screen of the user terminal;
Fig. 26 is a view showing a data structure transmitted from the user terminal to the authentication server;
Fig. 27 is a view showing a data structure transmitted from the user terminal to the authentication server;
Fig. 28 is a view showing a data structure transmitted from the authentication server to the settling server;
Fig. 29 is a view showing a data structure transmitted from the settling server to the authentication server;
Fig. 30 is a diagram showing an internal configuration of a network settling card used in an embodiment of the present invention;
Fig. 31 is a diagram showing an internal configuration of an authentication server used in an embodiment of the present invention;
Fig. 32 is a view showing a configuration of a shopping system used in an embodiment of the present invention;
Fig. 33 is a diagram showing an internal configuration of a network settling program used in an embodiment of the present invention;
Fig. 34 is a view showing the flow of purchase commodity selection processing which is processing of the shopping system;
Fig. 35 is a view showing the flow of user card authentication processing which is processing of the shopping system;
Fig. 36 is a view showing the flow of settling procedure processing which is processing of the shopping system;
Fig. 37 is a view showing the flow of confirmation processing of settling procedure completion information which is processing of the shopping system;
Fig. 38 is a view showing the flow of the confirmation processing of settling procedure completion information which is processing of the shopping system;
Fig. 39 is a view showing the flow of other confirmation processing of settling procedure completion information which is processing of the shopping system;
Fig. 40 is a view showing a configuration of a shopping system used in an embodiment of the present invention;
Fig. 41 is a view showing the flow of a purchase commodity selection processing which is processing of the shopping system;
Fig. 42 is a view showing the flow of user card authentication processing which is processing of the shopping system;
Fig. 43 is a view showing the flow of settling procedure processing which is processing of the shopping system;
Fig. 44 is a view showing a configuration of a shopping system used in the past; and
Fig. 45 is a view showing the flow of the shopping system used in the past.

### DETAILED DESCRIPTION OF THE PREFERRED EMBODIMENTS

Hereinafter the preferred embodiments for carrying out the present invention will be described. It is to be understood that the present invention is not limited to the description of the embodiments below, and can be appropriately modified and carried out without departing from the spirit and scope of the present invention.

### (First Embodiment)

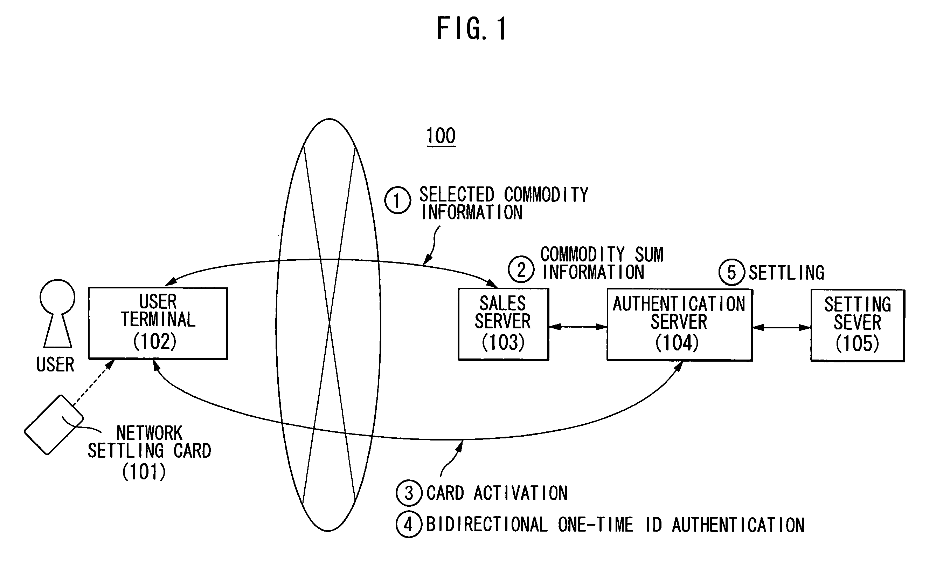

Hereinafter a first embodiment of the present invention will be described. First, the general configuration of a shopping system will be described. As shown in Fig. 1, the configuration of a shopping system 100 is roughly divided into the user side and the server side. The user side includes: a network settling card 101 for performing a settling procedure on a commodity selected by a user in the shopping system; and a user terminal 102 such as a desktop computer, a notebook computer, a mobile computer, or a mobile phone, which performs communication through a network upon connection or reading of the network settling card 101. The server side includes: a sales server 103 for selling commodities by connecting to the user terminal 102 through the network; an authentication server 104 for acquiring the sum information of the commodity selected by the user from the sales server 103, acquiring the information of a card to be used by the user in the settling procedure from a one-time ID transmitted from the user terminal 102, and acquiring the user settling information; and a settling server 105 for performing the settling procedure on the commodity selected by the user by acquiring the user settling information from the authentication server 104. Incidentally the sales server 103, the authentication server 104, and the settling server 105 may be physically integral or separate from each other.

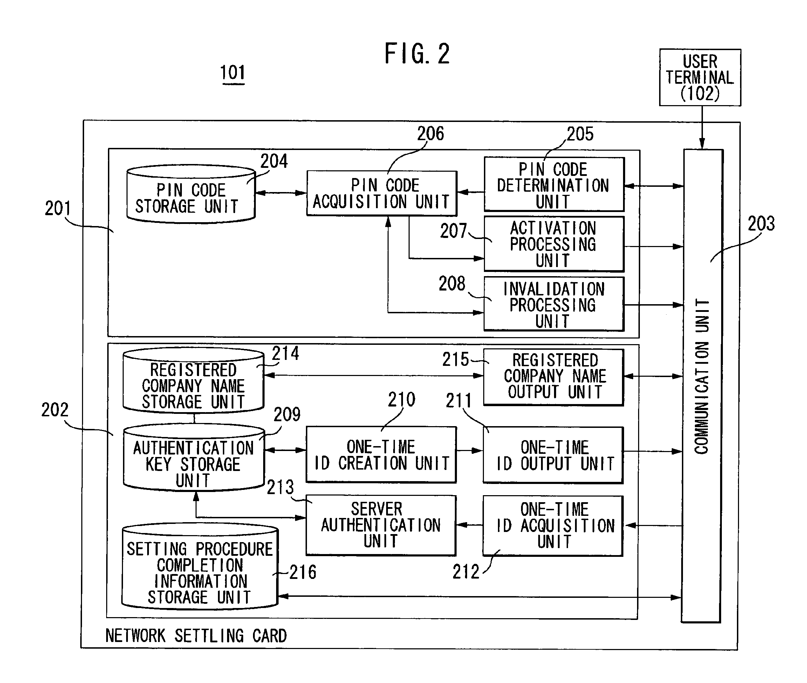

Next the network settling card 101 will be described. As shown in Fig. 2, the configuration of a program managed in the network settling card 101 is roughly divided into the following blocks: an active state controller 201 for managing the active state of the card; an authentication processing unit 202 for performing authentication using an authentication key created on the basis of the information of the card to be used in the settling procedure; and a communication unit 203 for notifying or acquiring various types of information. The respective blocks function when the network settling card 101 is connected to the user terminal 102 and the program of the network settling card 101 is executed by a computer of the user terminal 102. Incidentally the network settling card could be an IC card and a USB memory, but other configurations may also be used. In the case of the IC card, the computer of the user terminal 102 is caused to execute the program of the network settling card 101 and to perform read or write operation by a reader/writer. Also in the case of the USB memory, the computer of the user terminal 102 is caused to execute the program of the network settling card 101 and to perform read or write operation. Incidentally, the read/write operation may be performed either in contact mode or non-contact mode.

The active state controller 201 includes: a pin code storage unit 204 for managing a pin code for activating the network settling card 101 such as biometric information of the user or a password set by the user or by the issuing company of the network settling card 101; a pin code acquisition unit 205 for acquiring the pin code such as the biometric information or the password entered by the user; a pin code determination unit 206 for determining whether the pin code acquired by the pin code acquisition unit 205 is correct, using the pin code managed by the pin code storage unit 204; an activation processing unit 207 for activating the network settling card 101 when it is determined that the pin code is correct; and an invalidation unit 208 for invalidating the network settling card 101 when the pin code is wrong. Incidentally, the pin code managed by the pin code storage unit 204 is managed as a code for activating the program of the network settling card 101. The pin code is registered in advance by the user or the issuing company of the network settling card 101. In the case of the password, a character string of alphanumeric characters or symbols is previously recorded. In the case of the biometric information, the fingerprint, palm print, iris, or voice print and the like of the user is previously recorded. Incidentally, the pin code may be a combination of the biometric information and the password.

The authentication processing unit 202 includes: an authentication key storage unit 209 for managing an authentication key created on the basis of the information of the card and the like used in the settling procedure such as the card ID and code number issued by a credit card company or bank card company and the like to which the user subscribes, or the personal information or other information of the user; a one-time ID creation unit 210 for creating a one-time ID by the authentication key of the authentication key storage unit 209; a one-time ID output unit 211 for outputting the created one-time ID to the user terminal 102; a one-time ID acquisition unit 212 for acquiring a one-time ID created by the authentication server 104; a server authentication unit 213 for authenticating the authentication server 104 by the authentication key of the authentication key storage unit 209; a registered company name storage unit 214 for managing the card company name of the credit card company or bank card company and the like to which the user subscribes, by associating with the authentication key of the authentication key storage unit 209; a registered company name output unit 215 for outputting the registered company name; and a settling procedure completion information storage unit 216 for managing settling procedure completion information when it is acquired from the authentication server 104 together with a settling procedure completion notification.

Here a description will be made of a one-time ID and bidirectional authentication using the one-time ID. The one time ID is identification information that can be authenticated only once, which is used for identifying valid sender and receiver. In the embodiment, the one-time ID is created using the authentication key created on the basis of the information of the card and the like used in the settling procedure. The authentication key is managed in the network settling card 101 and in the authentication server 104. The one-time ID is set to be changed each time communication is performed therebetween. The authentication using the one-time ID is designed that only the valid sender and receiver can authenticate each other. For example, in the embodiment, the network settling card 101 creates a one-time ID by the authentication key managed in the card. Upon receiving the one-time ID, the authentication server 104 reads the one-time ID by the authentication key managed in the server. Thus the authentication server 104 can identify the card information including the ID and code number of the card used by the user in the settling procedure, or the personal information and the like. Then the authentication server 104 creates a one-time ID by the authentication key that was used for identifying the card information, and transmits the created one-time ID to the network settling card 101. The network settling card 101 reads the one-time ID by the authentication key managed in the card. Thus the network settling card 101 can identify the authentication server 104 and can recognize that the bidirectional one-time ID authentication is successful. As described above, the valid sender and receiver authenticate each other by managing the authentication keys, respectively, and creating the one-time IDs, which can be authenticated only once and are difficult to be predicted, using the authentication keys. Thus it is possible to prevent impersonation even if the one-time ID is leaked or stolen on the network and such a one-time ID is used. Further it is possible to mutually verify the validity on the user side and the server side, thereby making it possible to protect information on both sides. More detailed information regarding the one-time ID creation, the bidirectional one-time ID authentication, and the like is disclosed in "One-Time ID Creating Method, Authentication Method, Authentication System, Server, Client, and Program" of JP-A No. 282295/2004.

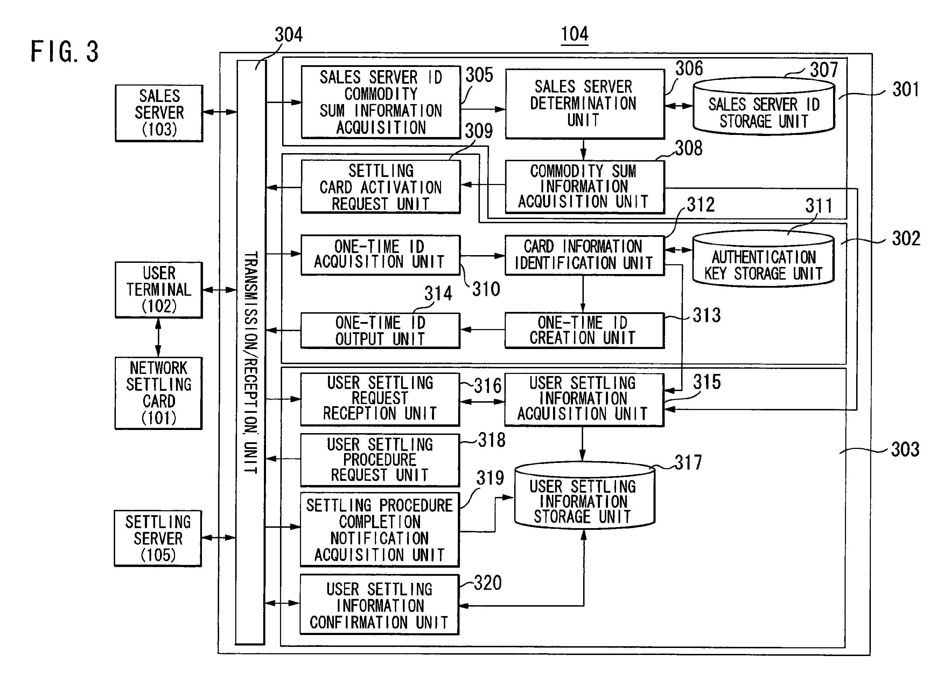

Next the general configuration of the authentication server 104 will be described. As shown in Fig. 3, the configuration of the program managed in the authentication server 104 is roughly divided into the following blocks; a commodity sum information management unit 301 for acquiring the sum information of the commodity selected by the user in the user terminal 102, from the sales server 103; a user card authentication processing unit 302 for authenticating the information of the card to be used by the user in the settling procedure, with respect to the one-time ID transmitted from the user terminal 102, using the authentication key created on the basis of the information of the card and the like managed by the server; a user settling procedure controller 303 for acquiring the user settling information from the acquired commodity sum information and the authenticated information of the card to be used by the user in the settling procedure, and requesting a settling procedure to the settling server 105 by the user settling information; and a transmission/reception unit 304 for notifying or acquiring various types of information.

The commodity sum information management unit 301 includes: a sales server ID and commodity sum information acquisition unit 305 for acquiring the sales server ID from the sales server 103 and the sum information of the commodity selected by the user; a sales server determination unit 306 for determining whether the acquired sales server ID is registered; a sales server ID storage unit 307 for managing the registered sales server ID; and a commodity sum information acquisition unit 308 for acquiring the commodity sum information transmitted from the sales server 103 when the sales server is valid.

The user card authentication processing unit 302 includes: an activation request unit 309 for requesting the user terminal 102 to activate the network settling card 101; a one-time ID acquisition unit 310 for acquiring the one-time ID transmitted from the network settling card 101; an authentication key storage unit 311 for managing the authentication key that was used for identifying the information such as the ID and code number of the card registered by the user or the personal information; a card information identification unit 312 for authenticating the information of the card to be used by the user in the settling procedure, with respect to the one-time ID acquired by the one-time ID acquisition unit 310, using the authentication key managed by the authentication key storage unit 311; a one-time ID creation unit 313 for creating a one-time ID by the authentication key that was used for the authentication; and a one-time ID output unit 314 for outputting the created one-time ID.

The user settling procedure controller 303 includes: a user settling information acquisition unit 315 for acquiring the user settling information from the commodity sum information acquired by the commodity sum information acquisition unit 308, and from the card information identified by the card information identification unit 312; a user settling request reception unit 316 for receiving a user settling request from the user terminal 102; a user settling information storage unit 317 for managing the user settling information; a user settling procedure request unit 318 for requesting a settling procedure to the settling server 105; a settling procedure completion notification acquisition unit 319 for acquiring settling procedure completion information when it is acquired from the settling server 105 together with a notification of completion of the settling procedure, and registering to the user settling procedure information storage unit 317; and a user settling information confirmation unit 320 for receiving a request of a list of the settling procedure completion information from the user terminal 102, and reading the list from the user settling procedure information storage unit 317.

Now a description will be made of the processing operation of the shopping system configured as described above. The flow of the processing in the shopping system is divided into an initial processing as a preparation step, a purchase commodity selection processing as a first step, a user card authentication processing as a second step, and a settling procedure processing as a final step.

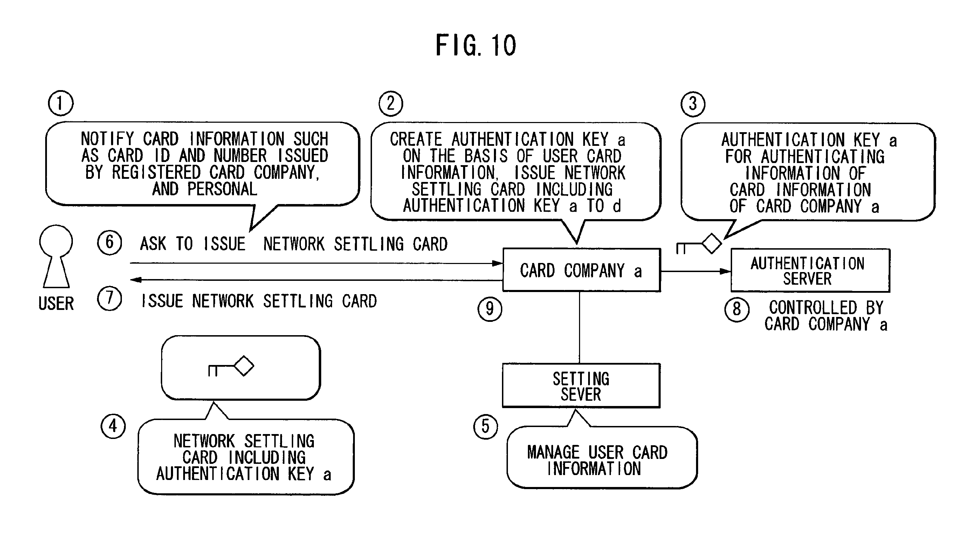

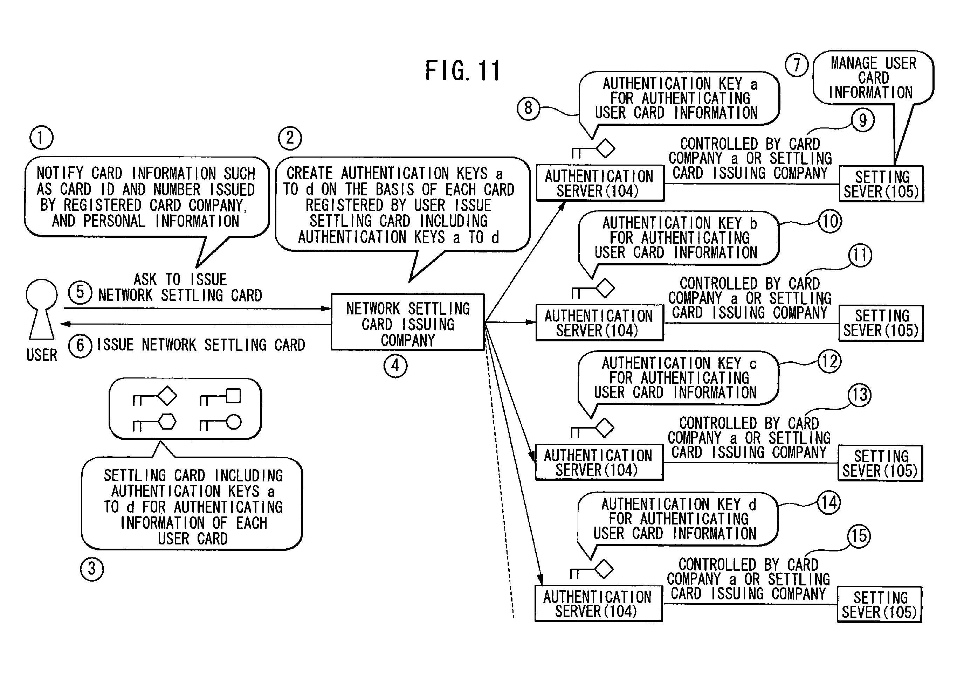

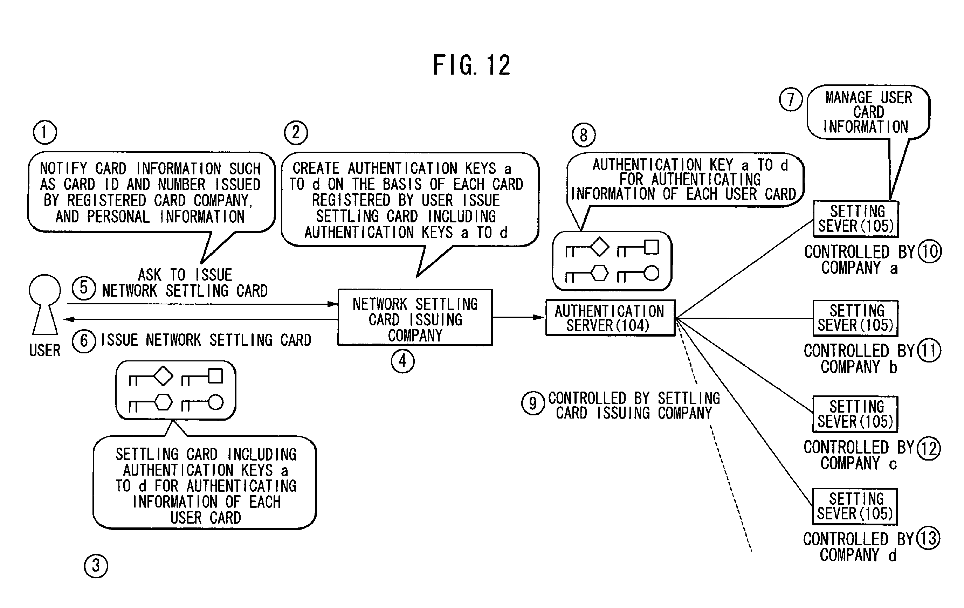

The initial processing as the preparation step will be described. On the user side, the user needs to acquire the network settling card 101 before using the shopping system. The acquisition means of the network settling card 101 includes that the user asks the card company managing the credit card or bank card the user has registered, to issue a network settling card as shown in Fig. 10, or that the user asks the company issuing the network settling card (hereinafter referred to as the network settling card issuing company) to issue a network settling card as shown in Figs. 11 and 12. In both cases, it is necessary to notify the card information including the ID, code number, and the like of the card such as the credit card or bank card that the user has registered, as well as the personal information of the user. On the basis of the notified card information, the card company or the network settling card issuing company creates an authentication key for authenticating the information of the card to be used by the user in the settling procedure, and registers the created authentication key to the network settling card 101, and then issues to the user. In the former case, only the same card company can be registered in the network settling card 101. In the latter case, different card companies can be registered in the network settling card 101. Incidentally, the user can notify the card information by any means, for example, by mailing or going to the card company or the network settling card issuing company.

The network settling card 101 is normally set to an inactive state. In order to set the network settling card 101 to be an active state, it is necessary to enter the same pin code as the pin code registered in the pin code storage unit 205 of the relevant card. The pin code registered in the pin code storage unit 205 shall be registered by either the user or the issuing company of the network settling card 101. However, when the pin code is biometric information, the user needs to register his or her biometric information.

On the server side, the authentication server 104 needs to manage the authentication key that can authenticate the information of the card to be used by the user in the settling procedure, from the one-time ID transmitted from the network settling card 101. In other words, it is necessary to manage the authentication key for the information of each card. Further the settling server 105 manages the card information such as the company name, ID, and code number of the card the user has as well as the user personal information, by associating with each other. The card information and the user personal information were notified by the user for acquiring the credit card or bank card, or for acquiring the network settling card 101. The shopping system can be used by performing the above described initial processing in the preparation step. In other words, when the user settling information is transmitted from the authentication server 104, the settling sever 105 can process the settling procedure on the commodity selected by the user, on the basis of the card information and the like managed by the relevant server. Incidentally, in the embodiment, the sales server 103 and the authentication server 104 mutually register their server information and mutually authenticate using their server IDs.

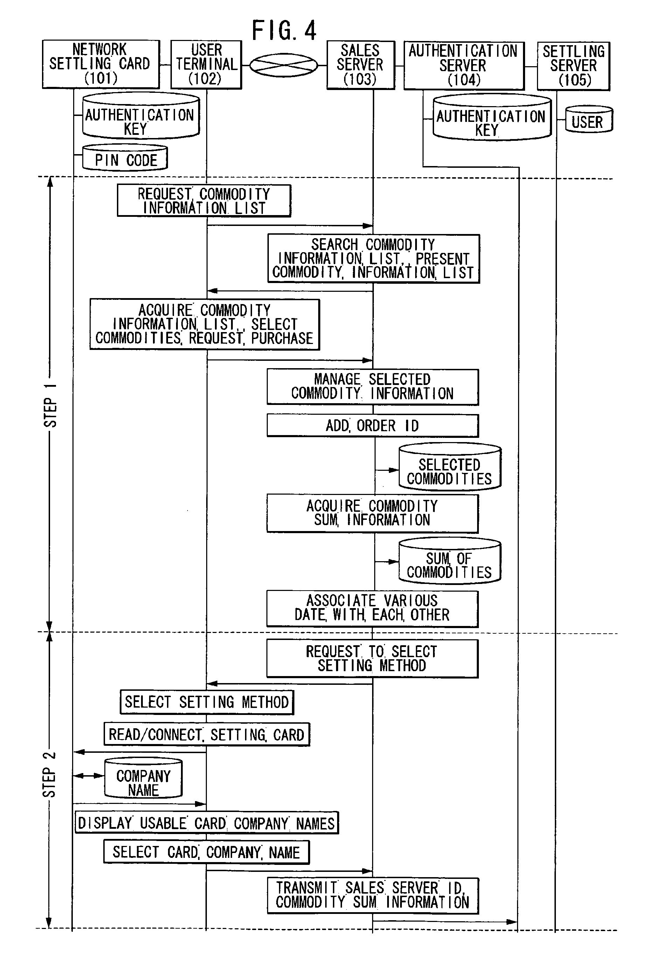

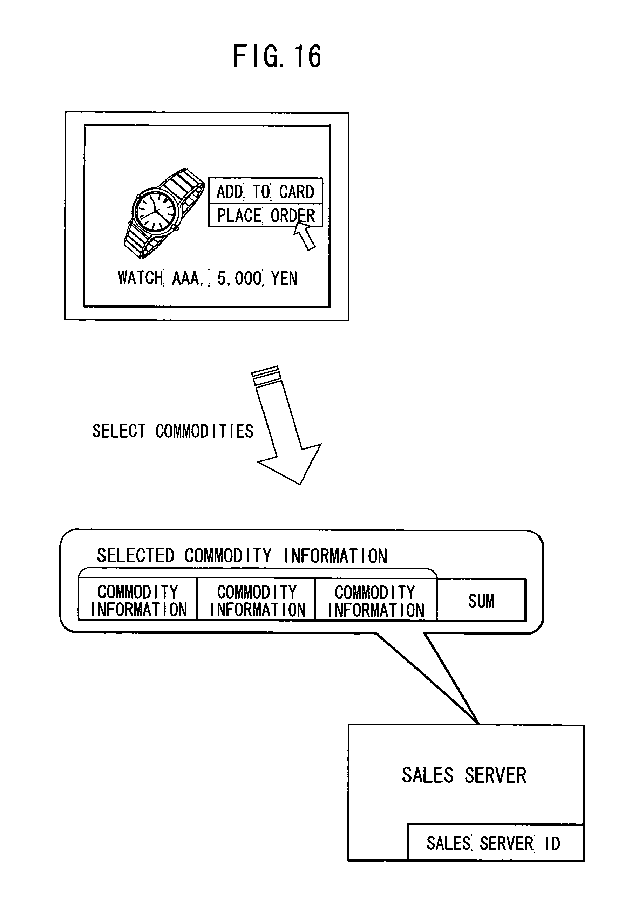

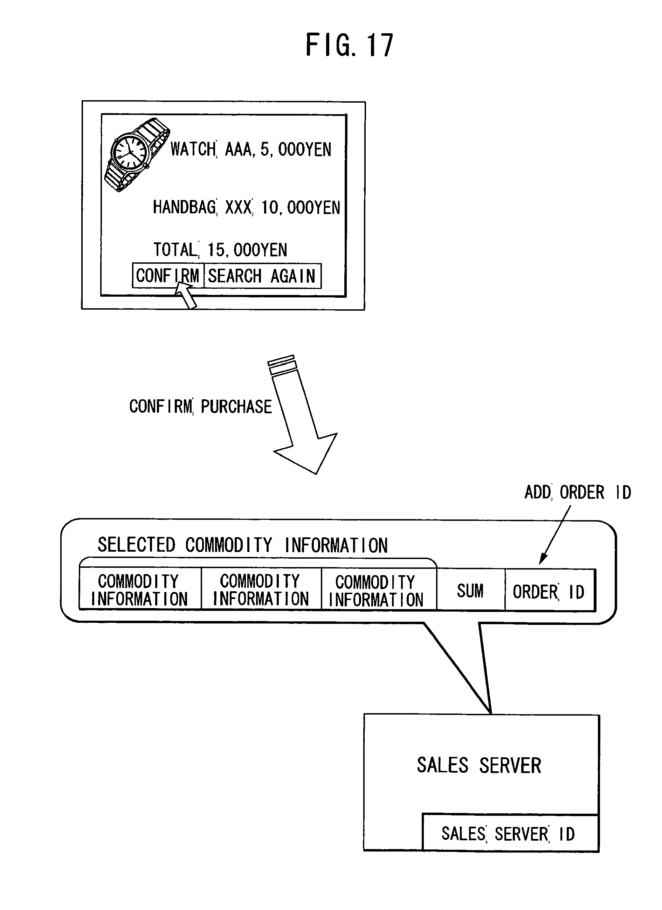

Next, the purchase commodity selection processing as the first step will be described with reference to Fig. 4. In step 1, the user connects to the sales server 103 from the user terminal 102 through the network, and requests a commodity information list in the server. In response the request, the sales server 103 presents the commodity information list to the user terminal 102, in which the user selects commodities that the user desires to purchase and places an order. More specifically, the commodity list is displayed on a display screen of the user terminal 102. The user selects "Add to Cart" for each commodity that the user desires to purchase by the mouse and button of the user terminal 102. When the user has selected all the commodities that the user desires to purchase, the user selects "Place Order" (see Fig. 16). When the user selects the commodities and places an order in the user terminal 102, the sum of the commodity information is calculated in the sales server 103. The information of the commodities the user ordered and the sum thereof are displayed on a display screen of the user terminal 102. The user confirms this. When intending to purchase, the user selects "Confirm" by the mouse and button of the user terminal 102 (see Fig. 17). If not indenting to purchase, the user selects "Search Again" to select again, or the user ends the communication with the sales server 103. When the user notifies the sales server 103 of the purchase intention, the sales server 103 creates an order ID on the ordered commodity information and the sum thereof. Then the sales server 103 stores various types of information, such as "User selected commodity information", "Sum of selected commodities", and "Order ID" by associating with each other (see Fig. 17).

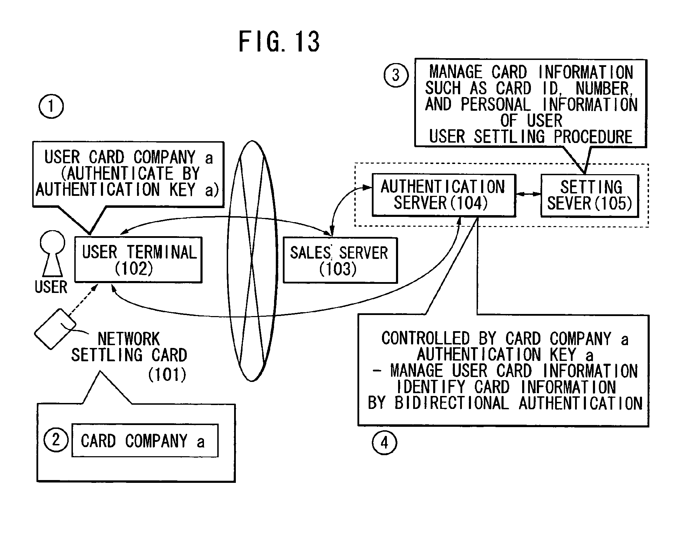

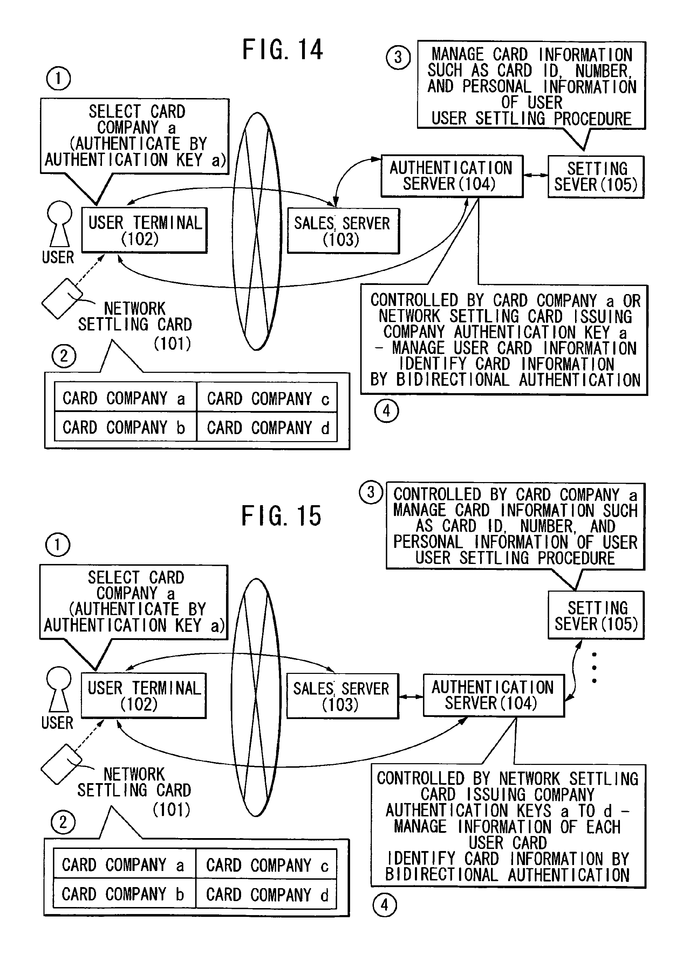

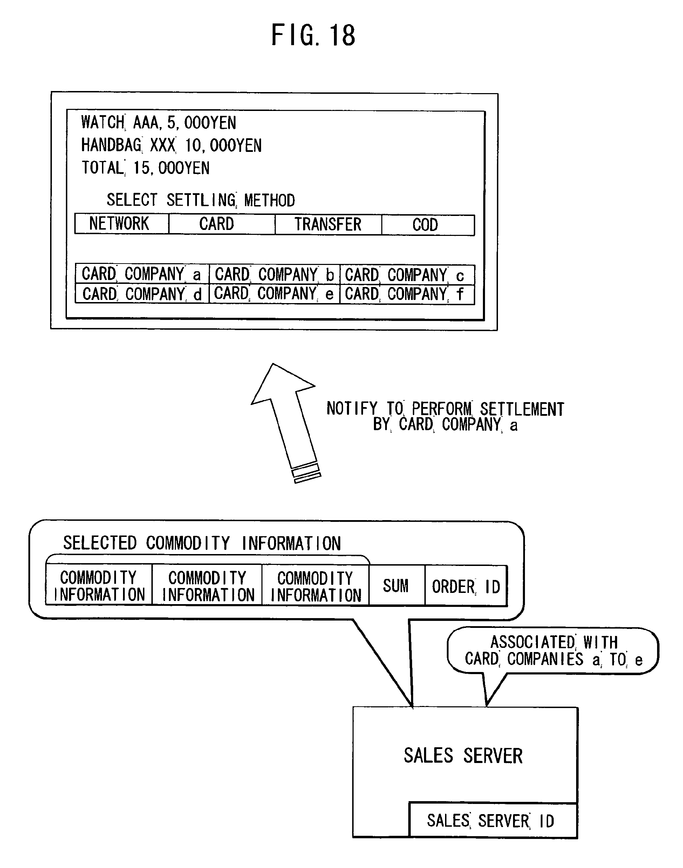

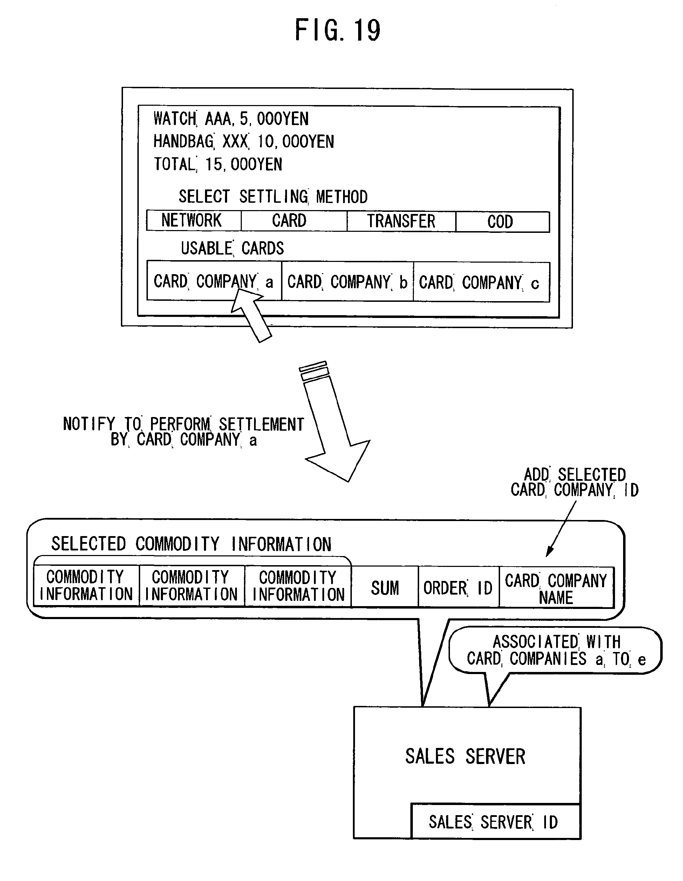

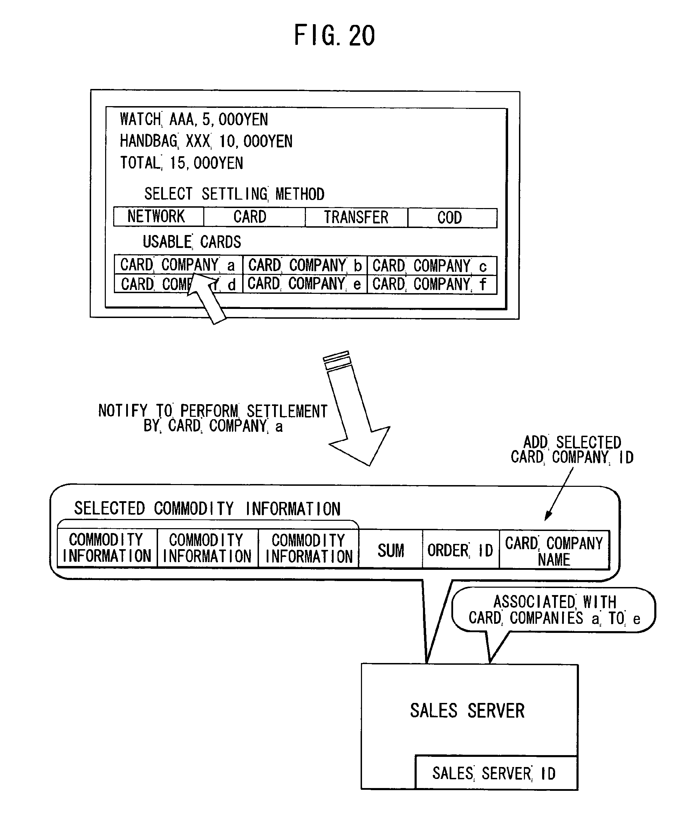

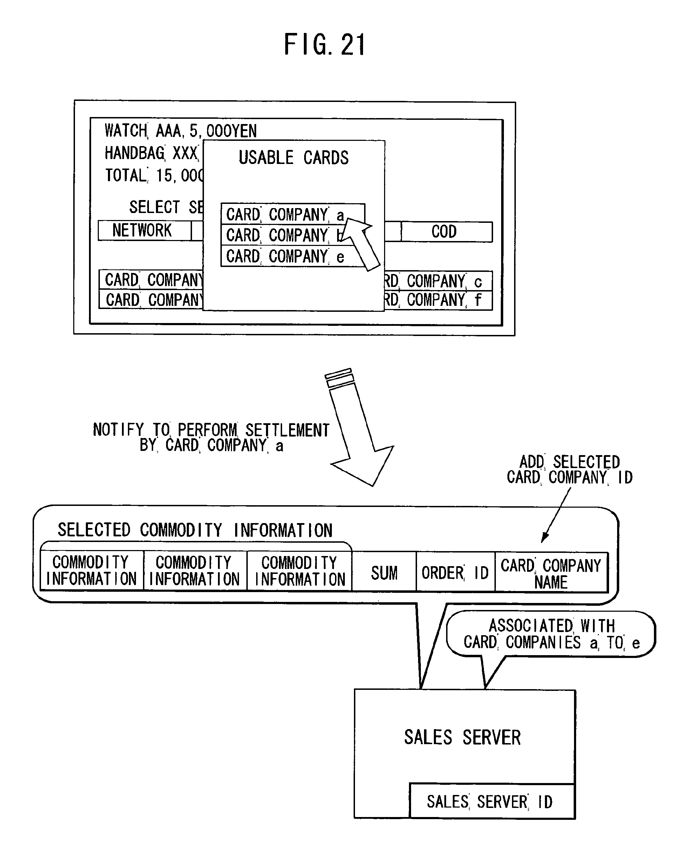

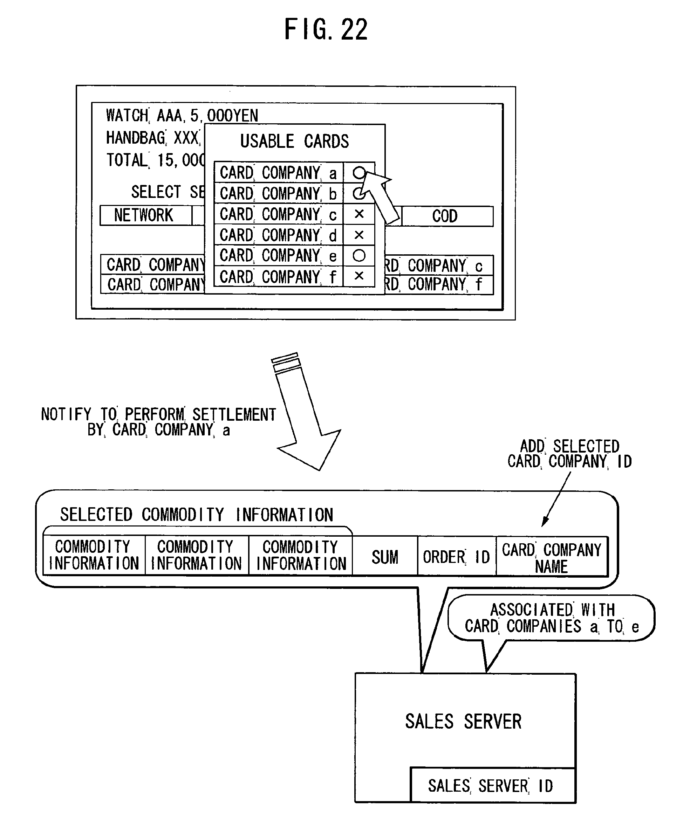

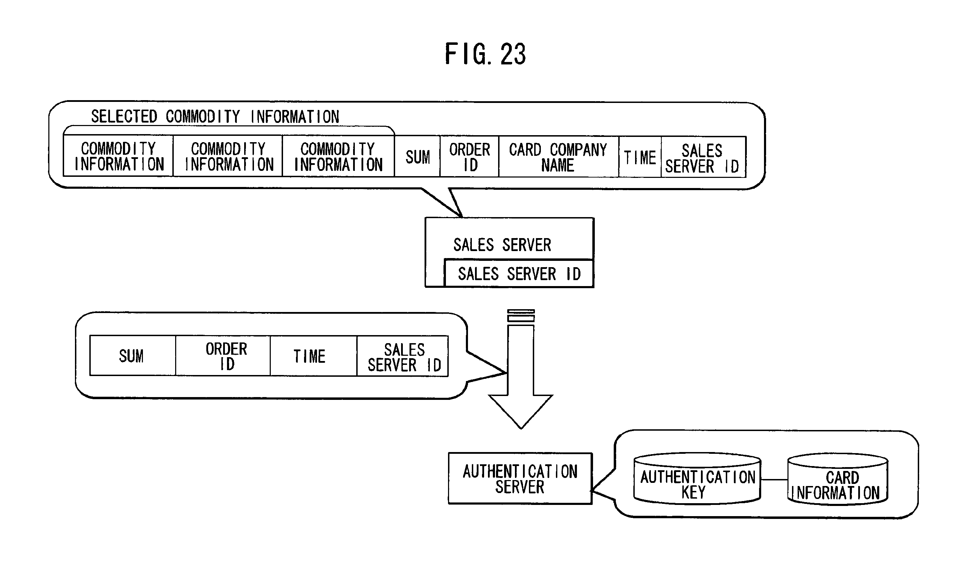

Next, in step 2, the settling method and the card information usable in the settling procedure are displayed on the display screen of the user terminal 102 (see Fig. 18). As the settling method, "Network payment", "Card payment", "Transfer payment", "Payment on deliver" and the like are displayed. Further as the card information usable in the settling procedure, the card companies with which the sales server 103 is associated are displayed. In the case of using "Network payment" for the settling procedure, the user connects the network settling card 101 to the user terminal 102 to read the card. Along with this, the computer of the user terminal 102 runs the program of the network settling card 101. Then, of the card companies managed in the sales server 103 and of the card companies managed in the network settling card 101, the card companies usable in the settling procedure are displayed on the display screen of the user terminal 102. More specifically, when the sales server manages card companies a to f and the network settling card 101 manages card companies a, b, e, h, the card companies a, b, e are displayed on the display screen of the user terminal 102. Examples of the display configuration of the card companies usable in the settling procedure are that the usable card companies are highlighted as shown in Figs. 19 and 20, and that a selection screen of the usable card companies is newly created as shown in Figs. 21 and 22. The user confirms this, and for example selects "Card Company a" by the mouse and button of the user terminal 102. The user notifies the sales server 103 of the card company name to be used in the settling procedure. Then the sales server 103 manages "Current time", "Selected card company name", "Sales server ID" and the like by associating with each other, in addition to the various types of information associated with each other and managed as described above. Upon acquisition of the card company name (here Card Company a) selected by the user, the sales server 103 communicates with the authentication server 104 that manages the relevant card company. Incidentally, the authentication server 104 is controlled by the card company (see Figs. 10, 13), or by the network settling card issuing company (see Figs. 12, 15), or by either the card company or the network settling card issuing company (see Figs. 11, 14). The sales server 103 transmits "Sum of selected commodities", "Order ID", "Current time", and "Sales server ID" that are associated with the user selected commodity information and managed therein, to the authentication server 104 (see Fig. 23). At this time, communication is performed between the user terminal 102 and the authentication server 104. In other words, when the user notifies the sales server 103 of the card company name to be used in the settling procedure, a link is provided to the authentication server 104, and thereby communication is performed between the user terminal 102 and the authentication server 104. In this way the purchase commodity selection processing is completed.

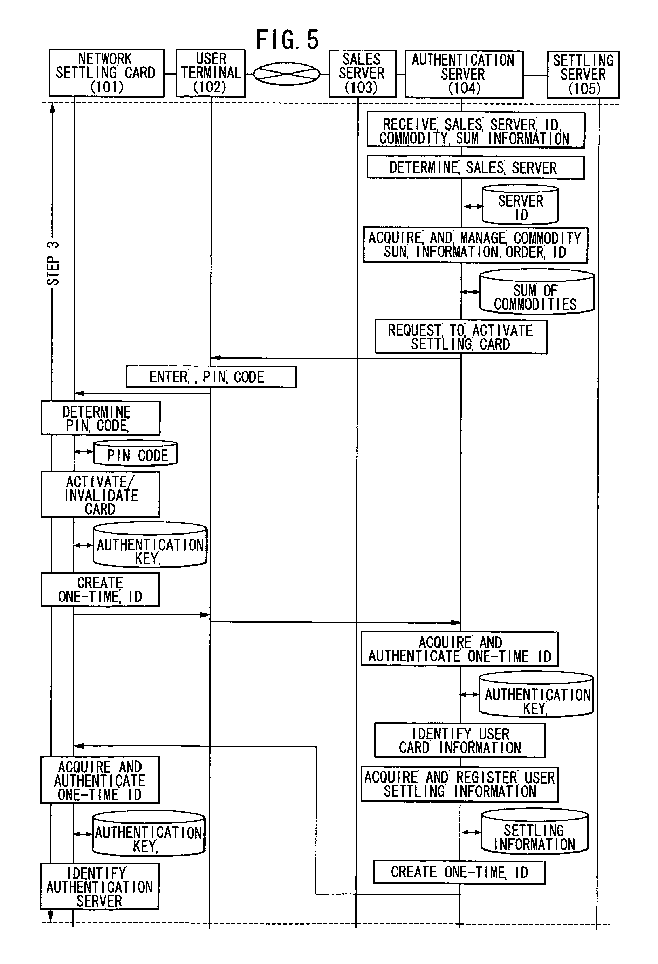

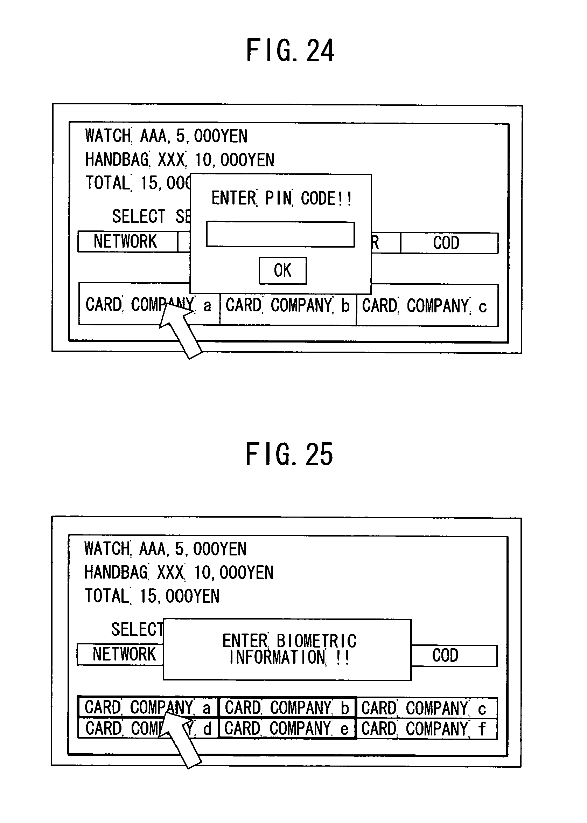

Next the user card authentication processing as the second step will be described with reference to Fig. 5. Upon acquisition of the data in which "Sum of selected commodities", "Order ID", "Current time", "Sales server ID" and the like are associated with each other, in step 3, the authentication server 104 determines whether the "Sales server ID" is valid. In the authentication server 104, the determination of the validity of the server is made by the sales server determination unit 306 using the server ID managed by the sales server ID storage unit 307. When the sales server 103 is valid, the above described information is acquired. In the authentication server 104, the information is acquired by the commodity sum information acquisition unit 308, and is entered to the user settling information acquisition unit 315. Then the authentication server 104 requests the user terminal 102 to activate the network settling card 101 and to transmit a one-time ID. This request is transmitted from the activation request unit 309. The request to perform authentication is displayed on the display screen of the user terminal 102, in response to which the user enters a pin code for activating the network settling card 101 by the mouse and button of the user terminal 102 (see Figs. 24, 25). According to the entry, the pin code determination unit 206 of the active state controller 201 of the network settling card 101 determines with the pin code managed by the pin code storage unit 204. When it is determined that the pin code is valid, the activation processing is performed and a one-time ID is created using the authentication key that is associated with the card company name selected by the user for the settling procedure. In the network settling card 101, the activation processing is processed by the activation processing unit 207 of the active state controller 201 while the one-time ID is created using the authentication key that is associated with the card company name selected by the user and is managed by the authentication key storage unit 209 of the authentication processing unit 202. The created one-time ID is transmitted to the authentication server 104 through the user terminal 102. At this time, it may be possible that the one-time ID entered to the user terminal 102 is displayed on the display screen and is transmitted to the authentication server 104 by the mouse and button of the user terminal 102. Alternatively, the one-time ID may be automatically transmitted to the authentication server 104, without being displayed on the display screen. When it is determined that the pin code is invalid, the activation processing is not performed and the one-time ID is not created.

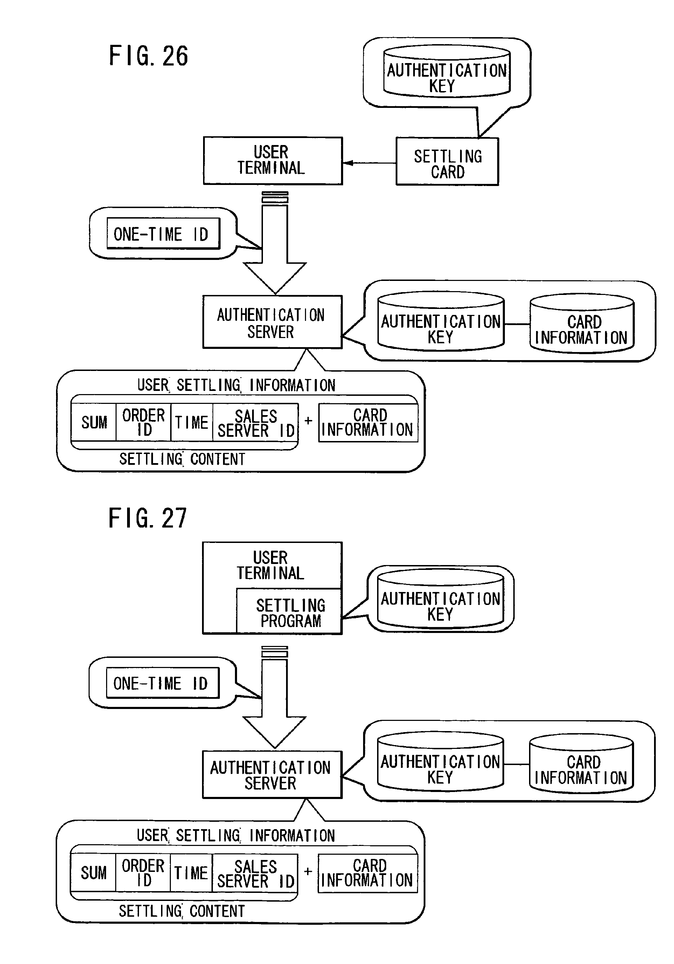

Upon receiving the one-time ID transmitted from the user terminal 102, the authentication server 104 performs processing for authenticating the information of the card to be used by the user in the settling procedure. In the authentication server 104, the authentication processing is performed with respect to the one-time ID entered to the card information identification unit 312 of the user card authentication processing unit 302, using the authentication key managed by the authentication key storage unit 311. By authenticating the user card information, the authentication server 104 can acquire "Card information" such as the card ID and code number. Then by entering the acquired "Card information" to the user settling information acquisition unit 315, the authentication server 104 can acquire the user settling information, together with the previously acquired data in which "Sum of selected commodities", "Order ID", "Current time", "Sales server ID" and the like are associated with each other. The authentication server 104 temporarily maintains such information (see Fig. 26).

While in the authentication server 104, a one-time ID is created using the authentication key that was used for authentication of the one-time ID transmitted from the user terminal 102. In the authentication server 104, the one-time ID is created using the authentication key that was used for the authentication in the card information identification unit 312. The created one-time ID is transmitted to the network settling card 101 through the user terminal 102. At this time, it may be possible that the one-time ID entered to the user terminal 102 is displayed on the display screen and is entered to the network settling card 101 by the mouse and button of the user terminal 102. Alternatively, the one-time ID may be automatically entered to the network settling card 101, without being displayed on the display screen.

Upon receiving the one-time ID entered from the user terminal 102, the network settling card 101 performs authentication processing for authenticating the authentication server 104. Similarly to the processing performed in the authentication server 104, the authentication processing is performed with respect to the one-time ID entered to the server authentication unit 213 of the authentication processing unit 202, using the authentication key managed by the authentication key storage unit 209. When the authentication server 104 is authenticated, the bidirectional one-time ID authentication is done between the network settling card 101 and the authentication server 104. Thus it is possible to mutually verify the validity on the user side and the server side, thereby making it possible to protect information on both sides. In this way the user card authentication is completed.

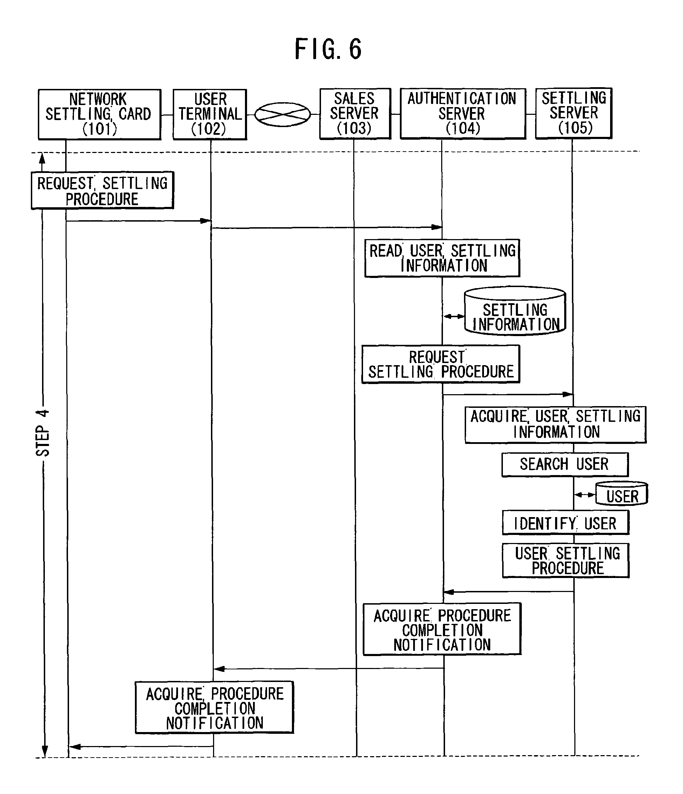

The settling procedure processing as the final step will be described with reference to Fig. 6. When the authentication processing of the authentication server 104 is completed in the network settling card 101, in step 4, the user requests a settling procedure processing to the authentication server 104 by the program of the network settling card 101. At this time, it may be possible that the settling procedure request entered to the user terminal 102 is displayed on the display screen and is transmitted to the authentication server 104 by the mouse and button of the user terminal 102. Alternatively, the settling procedure request may be automatically transmitted to the authentication server 104, without being displayed on the display screen.

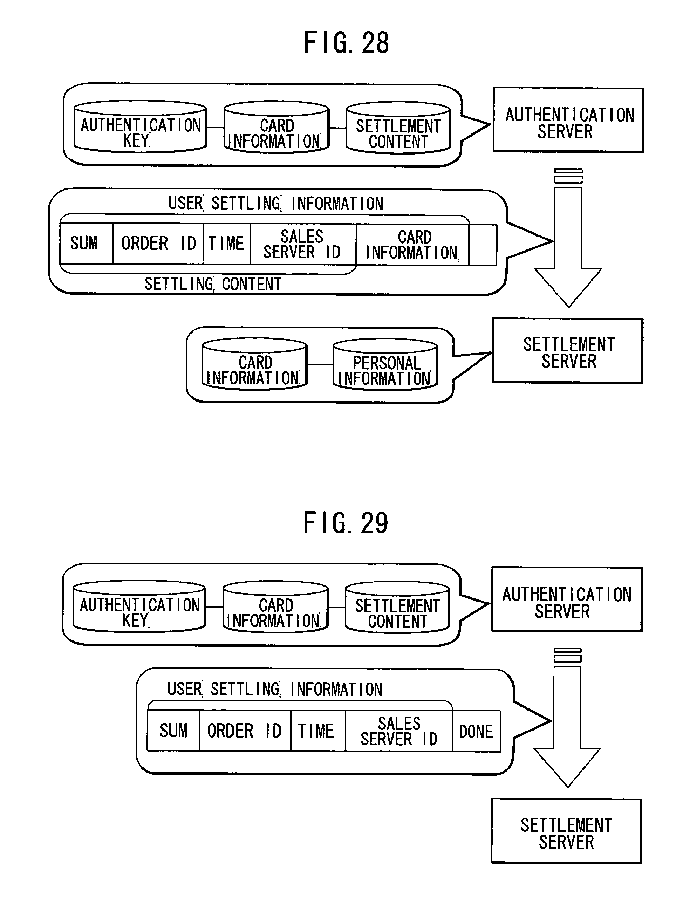

Upon receiving the settling procedure request transmitted from the user terminal 102, the authentication server 104 performs the settling procedure request to the settling server 105 by the maintained user settling procedure information (see Fig. 28). In the authentication server 104, the settling procedure request reception unit 316 receives the settling procedure request, and enters the user settling information temporarily maintained in the user information acquisition unit 315 into the settling procedure request unit 318. The settling procedure request unit 318 performs the settling procedure request to the settling server 105 by transmitting the user settling information thereto. The user settling information is also registered in the user settling information storage unit 317.

Upon receiving the user settling information, the settling server 105 performs the settling procedure on the commodities selected by the user. As described above, the user settling information is the information in which "Sum of selected commodities", "Order ID", "Current time", "Sales server ID", " Card information" and the like are associated with each other. The settling server 105 authenticates "Card information" included in the received user settling information, using "Card information" managed in the relevant server. In this way the settling server 105 can identify the user card information, and can perform the settling procedure on the commodities selected by the user. The credit card company or the card company such as the bank company, which controls the settling server 105, performs a billing procedure for the user identified on the basis of "Card information" included in the user settling information, while performing a payment procedure for the sales company that controls the sales server 103 identified on the basis of "Sales Server ID" included in the user settling information. Upon completion of the settling procedure, the settling server 105 transmits "Settling procedure completion information" with a flag "Done" indicating that the procedure is completed, to the authentication server 104 (see Fig. 29). Similarly to the user settling information, "Settling procedure completion information" is the data including "Sum of selected commodities", "Order ID", "Current time", "Sales server ID" and the like. In the authentication server 104, "Settling procedure completion information" is acquired by the settling procedure completion notification acquisition unit 319, and is managed by the user settling information storage unit 317. The user settling information has been registered in the user settling information storage unit 317. Thus when the user settling information storage unit 317 acquires "Settling procedure completion information", the authentication server 104 can determine the completion of the settling procedure of the relevant order ID. Then the authentication server 104 transmits that the settling procedure is completed, to the user terminal 102. In this way the settling procedure processing is completed and all the processing of the shopping system is completed.

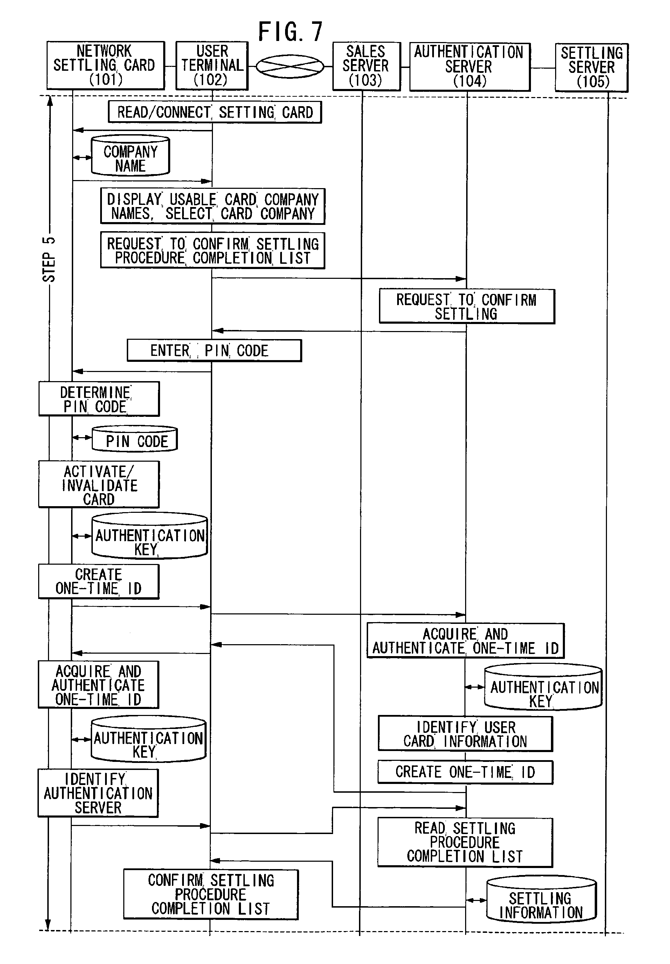

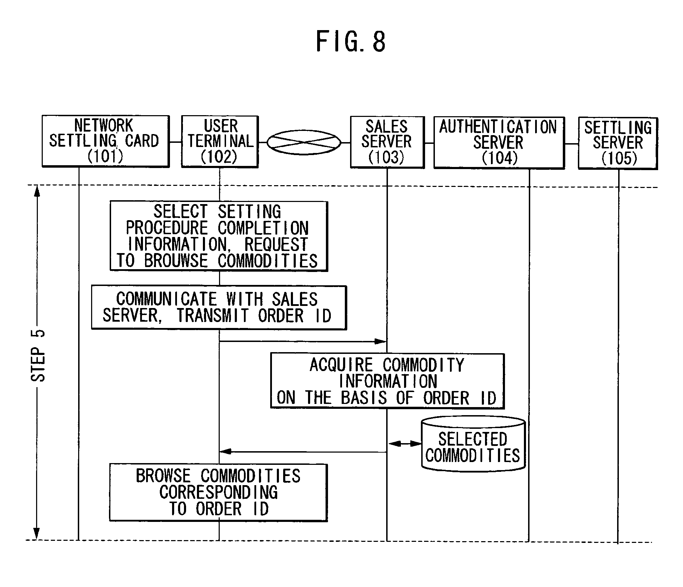

Finally the confirmation processing of the settling procedure completion information will be described with reference to Figs. 7 and 8. First, the user causes the user terminal 102 to read the network settling card 101 and to execute the program thereof. Along with this, the card company names usable in the settling procedure, the card company names desired to be confirmed on the settling procedure and the like, are displayed on the display screen of the user terminal 102. When the user selects the card company name that the user desires to confirm on the settling procedure, the user terminal 102 searches the server controlled by the selected card company (see Figs. 10, 13), or by the network settling card issuing company (see Figs. 12, 15), or by either the card company or the network settling card issuing company (see Figs. 11, 14), using the program of the network settling card 101. In this way communication is performed between the user terminal 102 and the authentication server 104. Incidentally, the search of the server is determined according to the issue configuration of the network settling card. The authentication server 104 requests the user terminal 102 to activate the network settling card 101 and to transmit a one-time ID. This request is transmitted from the activation request unit 309. The request to perform authentication processing is displayed on the display screen of the user terminal 102, in response to which the user enters a pin code for activating the network settling card 101 by the mouse and button of the user terminal 102. According to the entry, the network settling card 101 determines whether the pin code is valid. In the network settling card 101, the determination of the validity is made by the pin code determination unit 206 of the active state controller 201, using the pin code managed by the pin code storage unit 204. When it is determined that the pin code is valid, the activation processing is performed and the one-time ID is created using the authentication key managed being associated with the selected card company name. In the network settling card 101, the activation processing is processed by the activation processing unit 207 of the active state controller 201. While the one-time ID is created using the authentication key that is associated with the selected card company name and is managed by the authentication key storage unit 209 of the authentication processing unit 202. The created one-time ID is transmitted to the authentication server 104 through the user terminal 102. At this time, it may be possible that the one-time ID entered to the user terminal 102 is displayed on the display screen and is transmitted to the authentication server 104 by the mouse and button of the user terminal 102. Alternatively, the one-time ID may be automatically transmitted to the authentication server 104, without being displayed on the display screen. When it is determined that the pin code is invalid, the activation processing is not performed and the one-time ID is not created.

Upon receiving the one-time ID transmitted from the user terminal 102, the authentication server 104 performs authentication processing for authenticating the user card information. In the authentication server 104, the authentication processing is performed with respect to the one-time ID entered to the card information identification unit 312 of the user card authentication processing unit 302, using the authentication key managed by the authentication key storage unit 311. By authenticating the user card information, the authentication server 104 can acquire "Settling procedure completion information" using the relevant card information. In other words, the authentication server 104 can acquire a list of the data on which the settling procedure is completed and in which "Sum of selected commodities", "Order ID", "Current time", "Sales server ID" and the like are associated with each other, on the basis of the acquired "Card information".

Further in the authentication server 104, a one-time ID is created using the authentication key that was used for authentication of the one-time ID transmitted from the user terminal 102. In the authentication server 104, the one-time ID is created using the authentication key that was used for the authentication in the card information specification unit 312. The created one-time ID is transmitted to the network settling card 101 through the user terminal 102. At this time, it may be possible that the one-time ID entered to the user terminal 102 is displayed on the display screen and is entered to the network settling card 101 by the mouse and button of the user terminal 102. Alternatively, the one-time ID may be automatically entered to the network settling card 101, without being displayed on the display screen.

Upon receiving the one-time ID entered from the user terminal 102, the network settling card 101 performs authentication processing for authenticating the authentication server 104. In the network settling card 101, similarly to the processing performed in the authentication server 104, the authentication processing is performed with respect to the one-time ID entered to the server authentication unit 213 of the authentication processing unit 202, using the authentication key managed by the authentication key storage unit 209. When the authentication server 104 is authenticated, the bidirectional one-time ID authentication is done between the network settling card 101 and the authentication server 104. Thus it is possible to mutually verify the validity on the user side and the server side, thereby making it possible to protect information on both sides.

When the bidirectional authentication processing is completed, the user requests a list of "Settling procedure completion information" acquired as describe above, to the authentication server 104 through the user terminal 102. At this time, it may be possible that the request of the list from the user terminal 102 is displayed on the display screen and is transmitted to the authentication server 104 by the mouse and button of the user terminal 102. Alternatively, the request may be automatically transmitted to the authentication server 104, without being displayed no the display screen. In response to the request, the authentication server 104 transmits the list of "Settling procedure completion information" to the user terminal 102. The list of "Settling procedure completion information" is displayed on the display screen of the user terminal 102, in which the user selects "Settling procedure completion information" that the user desires to confirm by the mouse and button of the user terminal 102. Along with this, the communication with the sales server 103 by which the commodities were sold is performed. As described above, "Settling procedure completion information" is the data in which "Sum of selected commodities", "Order ID", "Current time", "Sales server ID" and the like are associated with each other. Upon selection of "Settling procedure completion information" that the user desires to confirm, a link is provided to the sales server 103 on the basis of "Sales server ID", and thereby the communication is performed. The sales server 103 acquires the commodity information that was associated with the order ID and registered at the time of the commodity purchase selection, on the basis of the transmitted "Order ID". The sales server 103 transmits the acquired commodity information to the user terminal 102. Then "Commodity information" on which the user has performed the settling procedure is displayed on the display screen of the user terminal 102. The user can confirm the commodity detail information on which the settling procedure is completed. In this way the confirmation processing of the settling procedure completion information is completed.

According to the embodiment, in the shopping system through the network, the one-time ID can be created using the authentication key included in the network settling card, by connecting the network settling card to the user terminal such as a desktop, a notebook, or a mobile computer, and by causing the computer of the terminal to execute the program while the server side can authenticate the information of the card to be used by the user in the settling procedure, with respect to the one-time ID, using the authentication key managed by the server. For this reason it is possible to save the trouble of notifying the user card information, the personal information, and the like on the user side. In addition, such information is not leaked or stolen on the network, so that the user can use the system with ease and confidence. Even if the one-time ID is leaked or stolen on the network and such a one-time ID is used, it is possible to prevent impersonation as the one-time ID is the one-time identification information which is difficult to be predicted. Further, by performing the bidirectional one-time ID authentication that authenticates not only the user card information on the server side but also the server on the user side, it is possible to mutually verify the validity on the user side and the server side, thereby making it possible to protect information on both sides.

Incidentally in the description of the embodiment, the purchase commodity selection processing performed between the user terminal 102 and the sales server 103 is operated online. However the processing can also be operated offline. When it is operated offline, the sales server 103 notifies the user terminal 102 and the authentication server 104 of the data in which "Selected card company name", "Order ID", "Sales server ID" and the like are associated with each other. In this way the user terminal 102 communicates with the authentication server 104. Thus the user card authentication can be processed after the purchase commodity selection processing.

Further in the description of the embodiment, it is assumed that "Settling procedure completion information" is managed by the authentication server 104. However, it may also be possible that the "Settling procedure completion information" is transmitted to the network settling card 101 or the user terminal 102, together with the settling procedure completion notification, and is recorded. In other words, when "Settling procedure completion information" is managed in the network settling card 101, the user can confirm the commodity detail information, by connecting the network settling card to the user terminal 102 or by causing the user terminal 102 to read the card, displaying the list of "Settling procedure completion information" after the activation of the card (see Fig. 8), and acquiring the commodity detail information that the user desires to browse from the list, on the basis of the sales server ID, the order ID, and the like. When "Settling procedure completion information" is managed by the user terminal 102, the user can confirm the commodity detail information by just displaying the list on the display screen and acquiring the commodity detail information that the user desires to browse from the list, on the basis of the sales server ID, the order ID, and the like.

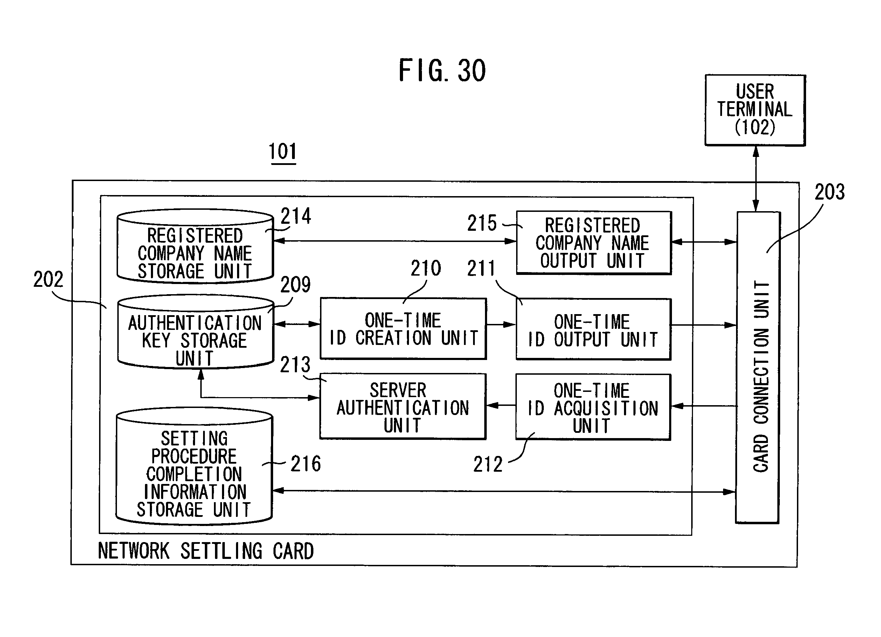

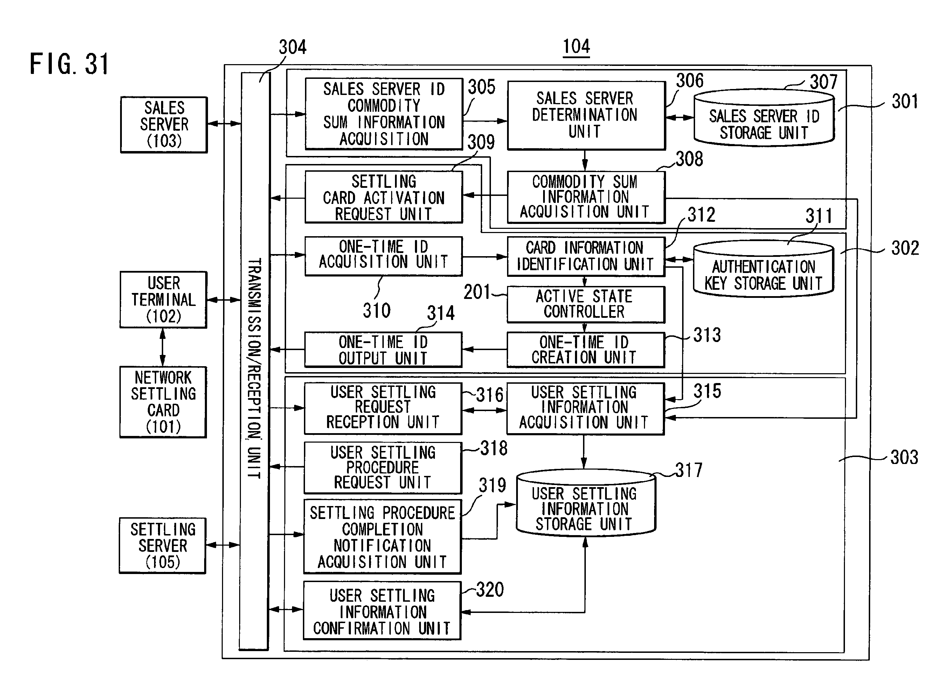

Further in the embodiment, when the computer of the user terminal 102 executes the program of the network settling card 101, the program is activated in such a way that the pin code entered by the user is authenticated with the pin code managed by the pin code storage unit 204. However, it may also be possible that the active state controller 201 is provided in the authentication server 104 (see Fig. 31) instead in the network settling card 101 (see Fig. 30), in order to manage the pin code for activating the network settling card 101 for each network settling card 101 or for the information of each card to be used in the settling procedure. In other words, when the authentication server 104 requests the information of the card to be used in the settling procedure to the network settling card 101 through the user terminal 102, the network settling card 101 creates a one-time ID by the authentication key corresponding to the card to be used in the settling procedure. The user enters a pin code to activate the network settling card 101 through the user terminal 102. The one-time ID creation unit 210 of the network settling card 101 adds the pin code to the one-time ID and transmits to the authentication server 104 through the user terminal 102. The authentication server 104 enters the received one-time ID to the card information identification unit 312 of the user card authentication processing unit 302, and identifies the information of the card to be used in the settling procedure, using the authentication key managed by the authentication key storage unit 311. After identifying the card information, the authentication server 104 enters the pin code added to the one-time ID into the active state controller 201. Then the pin code determination unit 206 of the active state controller 201 determines with the pin code managed by the pin code storage unit 204. When it is determined that the pin code is valid, the processing for activating the network settling card 101 is performed. Since the pin code is managed by the authentication server 104 instead of by the network settling card 101 and is transmitted after being added to the one-time ID, the theft of the pin code by a third party is difficult. Incidentally in this example, the pin code is transmitted being added to the one-time ID. However, it is possible to make it more difficult to steal the pin code on the network by performing encryption processing, as the addition means, to mix or embed the pin code into the one-time ID, and by performing decoding processing in the authentication server 104 to separate the one-time ID and the pin code.

Further in the embodiment, the bidirectional one-time ID authentication processing is performed only between the user terminal 102 and the authentication server 104. However, the bidirectional one-time ID authentication may be performed in communications between the respective servers. This makes it possible to implement a network between the sales server 103 and the authentication sever 104, or between the settling server 105 and the authentication server 104, through the Internet. Incidentally in the description of the embodiment, the commodity sum information is transmitted from the sales server 103 to the authentication server 104 for the purpose of notifying only the sum of the ordered commodities. However, the commodity sum information may be used to notify the names, prices, and the like of the commodities.

In the embodiment there is no description about the case in which a time-out occurs between the terminal and the servers. However the settling card 101 would become invalid due to a wrong pin code entered on the user side. As described above when the following processing is prevented from being performed in the system, the time-out may occur. In such a case, it is necessary to return to the step of the purchase commodity selection processing as the first step, and to perform the processing again.

### (Second Embodiment)

Hereinafter a second embodiment of the present invention will be described. The first embodiment describes the configuration in which the user uses the shopping system through the network by means of the network settling card 101. The present embodiment will describe the configuration in which the user uses the shopping system by activating the network settling program set to the user terminal 102, without using the network settling card 101.

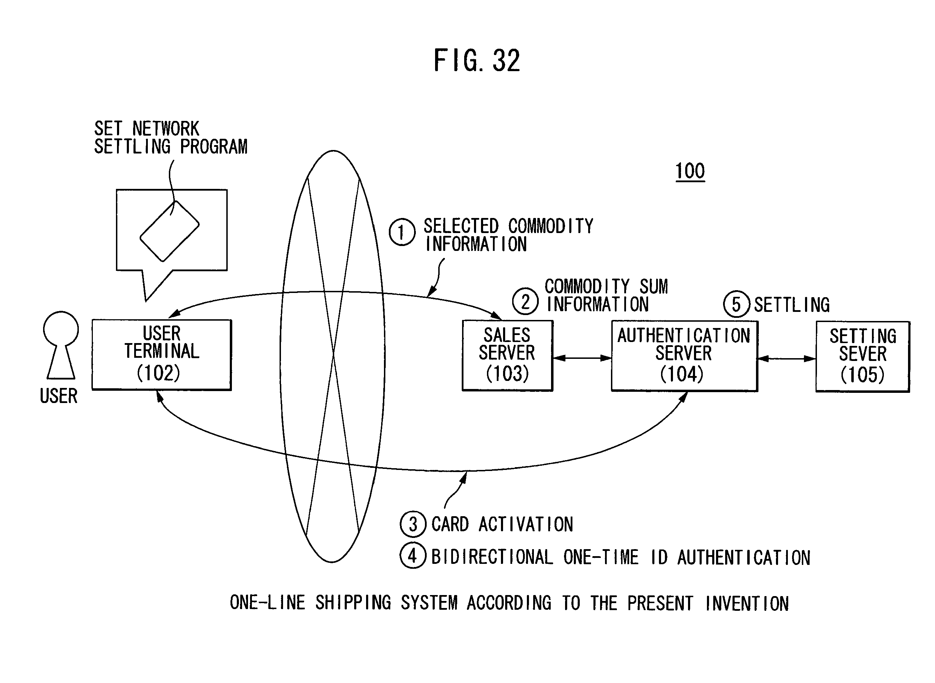

First the general configuration of the shopping system will be described. As shown in Fig. 32, a shopping system 100 is roughly divided into the user side and the server side. The user side includes a user terminal 102, such as a desktop computer, a notebook computer, a mobile computer, or a mobile phone, in which a network settling program is set. The server side includes: a sales server 103 for selling commodities by connecting to the user terminal 102 through a network; an authentication server 104 for acquiring the sum information of a commodity selected by a user from the sales server 103, acquiring the information of a card to be used by the user in the settling procedure from a one-time ID transmitted from the user terminal 102, and acquiring the user settling information; and a settling server 105 for performing the settling procedure on the commodity selected by the user by acquiring the user settling information from the authentication server 104. Incidentally the sales server 103, the authentication server 105, and the settling server 105, which are provided in the server side, may be physically integral or separate from each other.

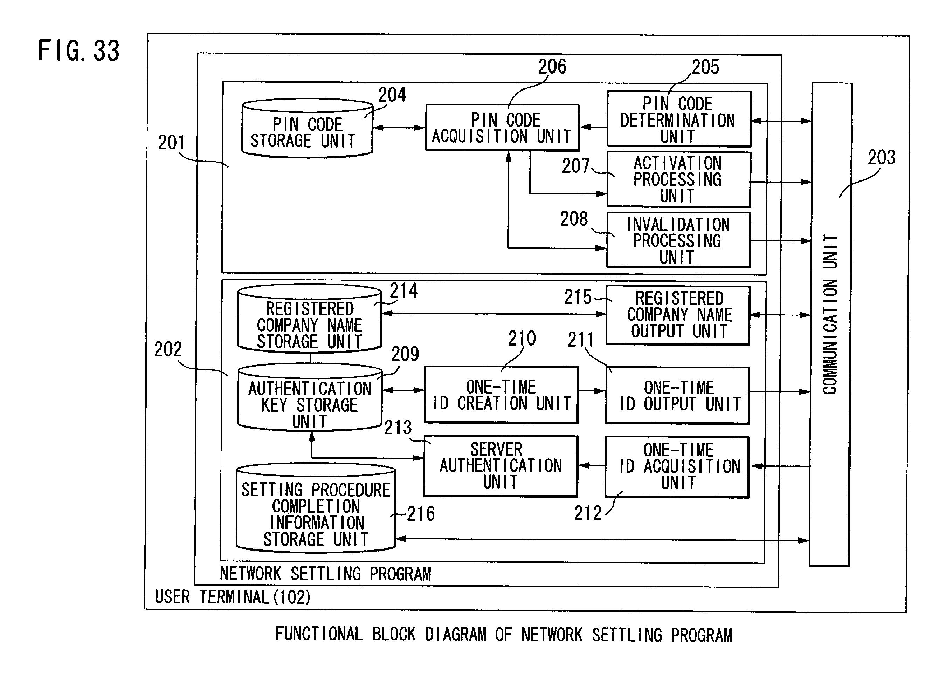

The network settling program has the same configuration as that of the program managed within the network settling card 101 as shown in Fig. 2 (see Fig. 33). Also the sales server 103, the authentication server 105, and the settling server 105 have the same configurations as those described above. Thus, a repeated description will be omitted.

Now description will be made of the processing operation of the shopping system configured as described above. Basically the overall processing of the shopping system is substantially the same as the flow described in the first embodiment. That is, the processing of the shopping system is divided into an initial processing as a preparation step, a purchase commodity selection processing as a first step, a user card authentication processing as a second step, and a settling procedure processing as a final step.

The initial processing as the preparation processing will be described. On the user side, the user needs to set the network settling program before using the shopping system. The acquisition means of the network settling program includes that the user asks a card company managing the credit card or bank card the user has registered to issue a network settling program, or that the user asks the company issuing the network settling program to issue a network settling program. In both cases, it is necessary to notify the card information including the ID, code number, and the like of the card such as the credit card or bank card the user has registered, as well as the user personal information. The card company or the company issuing the network settling program creates an authentication key for authenticating the information of the card to be used by the user in the settling procedure, on the basis of the notified card information, and registers the created authentication key to the network settling program, and then issues to the user. In the former case, only the same card company can be registered in the network settling program. In the latter case, different card companies can be registered in the network settling program. Incidentally, for example, the means of issuing to the user is to transmit the program by e-mail, or to mail the program stored in an IC card or a memory medium. In both cases, the user sets the network settling program to the user terminal 102.

The network settling program is normally set to an inactive state. In order to set the network settling program to an active state, it is necessary to enter the same pin code as the pin code registered in a pin code storage unit 205 of the program. The pin code registered in the pin code storage unit 205 shall be registered by either the user or the issuing company of the program. However, when the pin code is biometric information, the user needs to register his or her biometric information.

On the server side, the authentication server 104 needs to manage the authentication key that can authenticate the information of the card to be used by the user in the settling procedure, from the one-time ID transmitted from the user terminal 102. In other words, it is necessary to manage the authentication key for the information of each card. The settling server 105 manages the card information, such as the company name, ID, code number, and the like of the card the user has, as well as the user personal information, by associating with each other. The card information and the user personal information were notified by the user for acquiring the credit card or bank card, or for acquiring the network settling program. The shopping system can be used by performing the above described initial processing in the preparation step. In other words, when the user settling information is transmitted from the authentication server 104, the settling sever 105 can process the settling procedure on the commodity selected by the user, on the basis of the card information managed by the settling server 105. Incidentally in the embodiment, the sales server 103 and the authentication server 104 mutually register their server information and mutually authenticate using their server IDs.

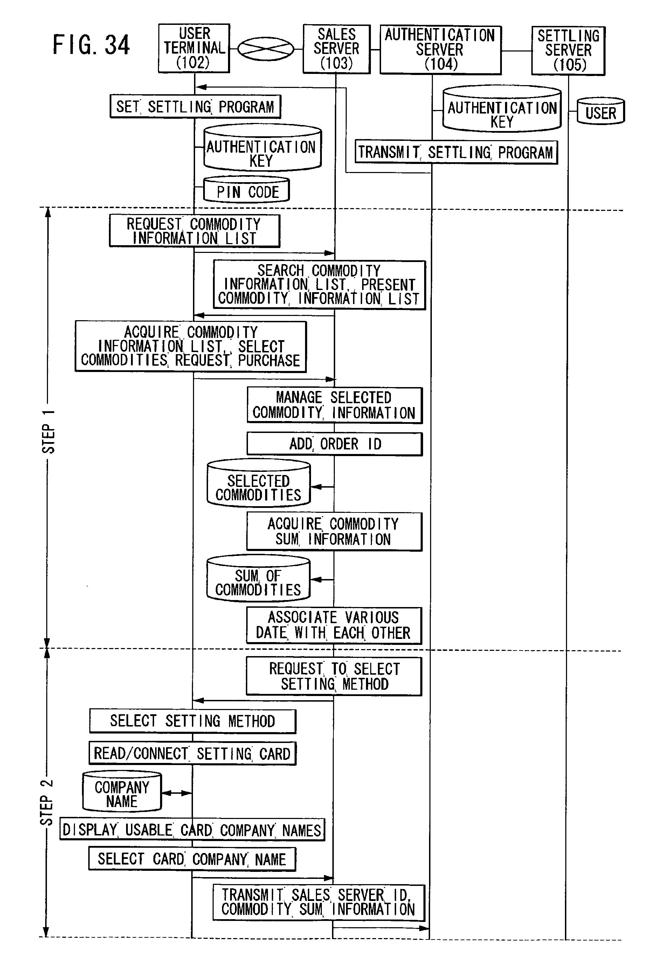

Next the purchase commodity selection processing as the first step will be described with reference to Fig. 34. Similarly to the first embodiment, in step 1, the user connects to the sales server 103 from the user terminal 102 through the network, and requests a commodity information list in the server. In response to the request, the sales server 103 presents the commodity information list to the user terminal 102, in which the user selects commodities that the user desires to purchase and places an order. More specifically, the commodity list is displayed on the display screen of the user terminal 102. The user selects "Add to Cart" for each commodity that the user desires to purchase by the mouse and button of the user terminal 102. When the user has selected all the commodities that the user desirers to purchase, the user selects "Place Order" by the mouse and button of the user terminal 102 (see Fig. 16). When the user selects the commodities and places an order in the user terminal 102, the sum of the commodity information is calculated in the sales server 103. The information of the commodities the user ordered and the sum thereof are displayed on the display screen of the user terminal 102. The user confirms this. When intending to purchase, the user selects "Confirm" by the mouse and button of the user terminal 102 (see Fig. 17). If not indenting to purchase, the user selects "Search Again" to select again, or the user ends the communication with the sales server 103. When the user notifies the sales server 103 of the purchase intention, the sales server 103 creates an order ID on the ordered commodity information and the sum thereof, and stores various types of information including "User selected commodity information", "Sum of selected commodities", "Order ID" and the like by associating with each other (see Fig. 17).

Next, in step 2, the settling method and the card information usable in the settling procedure, are displayed on the display screen of the user terminal 102 (see Fig. 18). As the settling method, "Network payment", "Card payment", "Transfer payment", "Payment on deliver" and the like are displayed. Further as the card information usable in the settling procedure, the card companies with which the sales server 103 is associated are displayed. In the case of using "Network payment" for the settling procedure, the user activates the network settling program set to the user terminal 102. Along with this, a computer of the user terminal 102 runs the program. Then, of the card companies managed in the sales server 103 and of the card companies managed in the network settling program, the card companies usable in the settling procedure are displayed on the display screen of the user terminal 102. More specifically, when card companies a to f are managed by the sales server 103 and card companies a, b, e, h are managed in the network settling program, the card companies a, b, e are displayed on the display screen of the user terminal 102. Examples of the display configuration of the card companies usable in the settling procedure are that the usable card companies are highlighted as shown in Figs. 19 and 20, or that a selection screen of the usable card companies is newly created as shown in Figs. 21 and 22. The user confirms this, and for example selects "Card Company a" by the mouse and button of the user terminal 102. The user notifies the sales server 103 of the card company name to be used in the settling procedure. Then the sales server 103 manages "Current time", "Selected card company name", "Sales server ID" and the like by associating with each other, in addition to the various types of information associated with each other and managed as described above. Upon acquisition of the card company name (here Card Company a) selected by the user, the sales server 103 communicates with the authentication server 104 that manages the relevant card company. Incidentally, the authentication server 104 is controlled by the card company (see Figs. 10, 13), or by the company issuing the network settling program (see Figs. 12, 15), or by either the card company or the company issuing the network settling program (see Figs. 11, 14). The sales server 103 transmits "Sum of selected commodities", "Order ID", "Current time", and "Sales server ID", which are associated with the user selected commodity information and managed therein, to the authentication server 104 (see Fig. 23). At this time, communication is performed between the user terminal 102 and the authentication server 104. In other words, when the user notifies the sales server 103 of the card company name to be used in the settling procedure, a link is provided to the authentication server 104, and thereby communication is performed between the user terminal 102 and the authentication server 104. In this way the purchase commodity selection processing is completed.

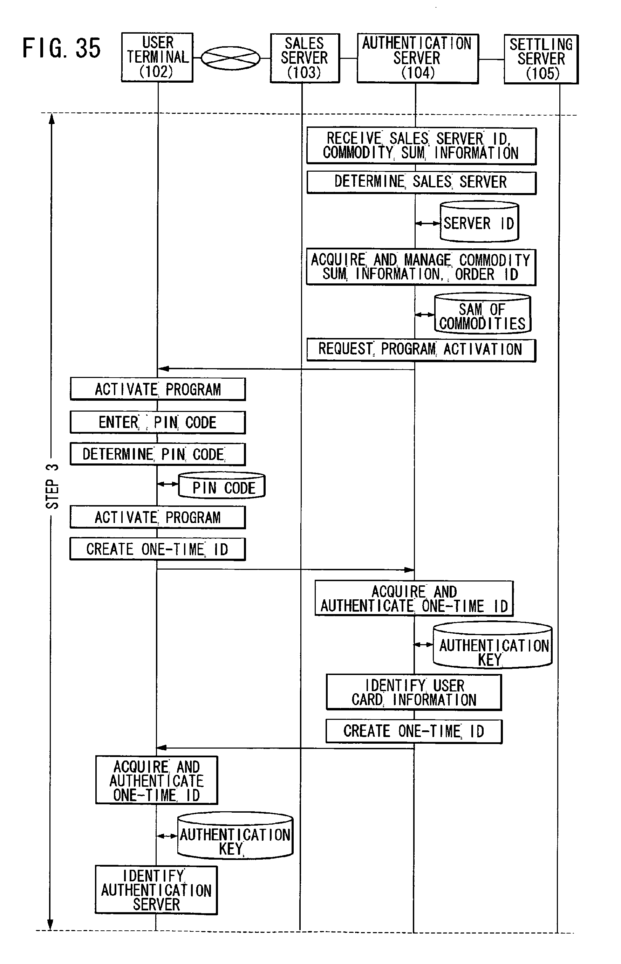

Next the user card authentication processing as the second step will be described with reference to Fig. 35. Upon acquisition of the data in which "Sum of selected commodities", "Order ID", "Current time", "Sales server ID" and the like are associated with each other, in step 3, the authentication server 104 determines whether the "Sales server ID" is valid. In the authentication server 104, the determination of the validity of the server is made by the sales server determination unit 306 using the server ID managed by the sales server ID storage unit 307. When the sales server 103 is valid, the above described information is acquired. In the authentication server 104, the information is acquired by the commodity sum information acquisition unit 308 and is entered to the user settling information acquisition unit 315. Then the authentication server 104 requests the user terminal 102 to activate the network settling program and to transmit a one-time ID. This request is transmitted from the activation request unit 309. The request to perform authentication processing is displayed on the display screen of the user terminal 102, in response to which the user enters a pin code for activating the network settling program by the mouse and button of the user terminal 102 (see Figs. 24, 25). According to the entry, the pin code determination unit 206 of the active state controller 201 determines with the pin code managed by the pin code storage unit 204. When it is determined that the pin code is valid, activation processing is performed, and a one-time ID is created using the authentication key that is associated with the card company name the user selected for the settling procedure. In the network settling program, the activation processing is processed by the activation processing unit 207 of the active state controller 201 while the one-time ID is created using the authentication key that is associated with the card company name selected by the user and is managed by the authentication key storage unit 209 of the authentication processing unit 202. The created one-time ID is transmitted to the authentication server 104 through the user terminal 102. At this time, it may be possible that the one-time ID entered to the user terminal 102 is displayed on the display screen and is transmitted to the authentication server 104 by the mouse and button of the user terminal 102. Alternatively, the one-time ID may be automatically transmitted to the authentication server 104, without being displayed on the display screen. When it is determined that the pin code is invalid, the activation processing is not performed and the one-time ID is not created.

Upon receiving the one-time ID transmitted from the user terminal 102, the authentication server 104 performs authentication processing for authenticating the information of the card used by the user in the settling procedure. In the authentication server 104, the authentication processing is performed with respect to the one-time ID entered to the card information identification unit 312 of the user card authentication processing unit 302, using the authentication key managed by the authentication key storage unit 311. By authenticating the user card information, the authentication server 104 can acquire "Card information" such as the card ID and code number. Then by entering the acquired "Card information" to the user settling information acquisition unit 315, the authentication server 104 can acquire the user settling information, together with the previously acquired data in which the information such as "Sum of selected commodities", "Order ID", "Current time", "Sales server ID" are associated with each other. The authentication server 104 temporarily maintains such information (see Fig. 26).

While in the authentication server 104, a one-time ID is created using the authentication key that was used for authentication of the one-time ID transmitted from the user terminal 102. In the authentication server 104, the one-time ID is created using the authentication key that was used for the authentication in the card information identification unit 312. The created one-time ID is transmitted to the user terminal 102. Then the user terminal 102 performs authentication processing for authenticating the authentication server 104 by the network settling program. At this time, it may be possible that the one-time ID entered to the user terminal 102 is displayed on the display screen of the user terminal 102 to execute the network settling program by the mouse and button of the user terminal 102. Alternatively, the network settling program may be automatically executed without the one-time ID being displayed.

Similarly to the processing performed in the authentication server 104, the authentication processing is performed with respect to the one-time ID entered to the server authentication unit 213 of the authentication processing unit 202, using the authentication key managed by the authentication key storage unit 209. When the authentication server 104 is authenticated, the bidirectional one-time ID authentication is done between the network settling card 101 and the authentication server 104. Thus it is possible to mutually verify the validity on the user side and the server side, thereby making it possible to protect information on both sides. In this way the user card authentication processing is completed.

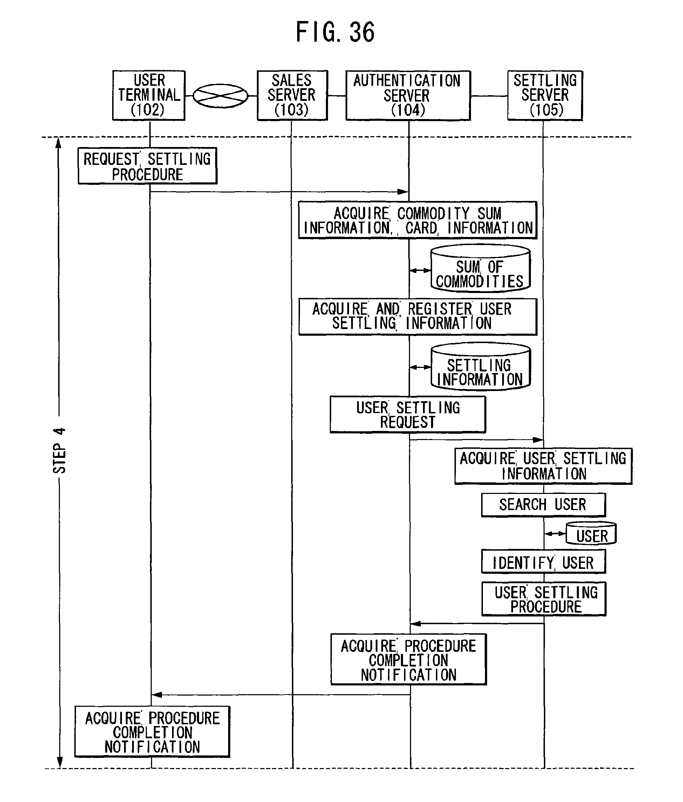

The settling procedure processing as the final step will be described with reference to Fig. 36. When the authentication processing of the authentication server 104 is completed in the user terminal 102, in step 4, the user requests a settling procedure processing to the authentication server 104 by the network settling program running in the user terminal 102. At this time, it may be possible that the settling procedure request entered to the user terminal 102 is displayed on the display screen and is transmitted to the authentication server 104 by the mouse and button of the user terminal 102. Alternatively, the request may be automatically transmitted to the authentication server 104, without being displayed on the display screen.

Upon receiving the settling procedure request transmitted from the user terminal 102, the authentication server 104 performs the settling procedure request to the settling server 105 by the maintained user settling procedure information (see Fig. 28). In the authentication server 104, the settling procedure request reception unit 316 receives the settling procedure request, and enters the user settling information temporarily maintained in the user information acquisition unit 315 into the settling procedure request unit 318. Then the settling procedure request unit 318 performs the settling procedure request to the settling server 105 by transmitting the user settling information thereto. The user settling information is also registered in the user settling information storage unit 317.

Upon receiving the user settling information, the settling server 105 performs the settling procedure on the commodities selected by the user. As described above, the user settling information is the information in which "Sum of selected commodities", "Order ID", "Current time", "Sales server ID", "Card information" and the like are associated with each other. The settling server 105 authenticates "Card information" included in the received user settling information, using "Card information" managed in the relevant server. In this way the settling server 105 can identify the user card information, and can perform the settling procedure on the commodities selected by the user. The credit card company or the card company such as the bank company, which controls the settling server 105, performs a billing procedure for the user identified on the basis of "Card information" included in the user settling information while performing a payment procedure for the sales company that controls the sales server 103 on the basis of "Sales server ID" included in the user settling information. Upon completion of the settling procedure, the settling server 105 transmits "Settling procedure completion information" with a flag "Done" indicating that the procedure is completed, to the authentication server 104 (see Fig. 29). Similarly to the user settling information, "Settling procedure completion information" is the data including "Sum of selected commodities", "Order ID", "Current time", "Sales server ID" and the like. In the authentication server 104, "Settling procedure completion information" is acquired by the settling procedure completion notification acquisition unit 319, and is managed by the user settling information storage unit 317. The user settling information has been registered in the user settling information storage unit 317. Thus when the user settling information storage unit 317 acquires "Settling procedure completion information", the authentication server 104 can determine the completion of the settling procedure of the relevant order ID. Then the authentication server 104 transmits that the settling procedure is completed, to the user terminal 102. In this way the settling procedure processing is completed, and all the processing of the shopping system is completed.

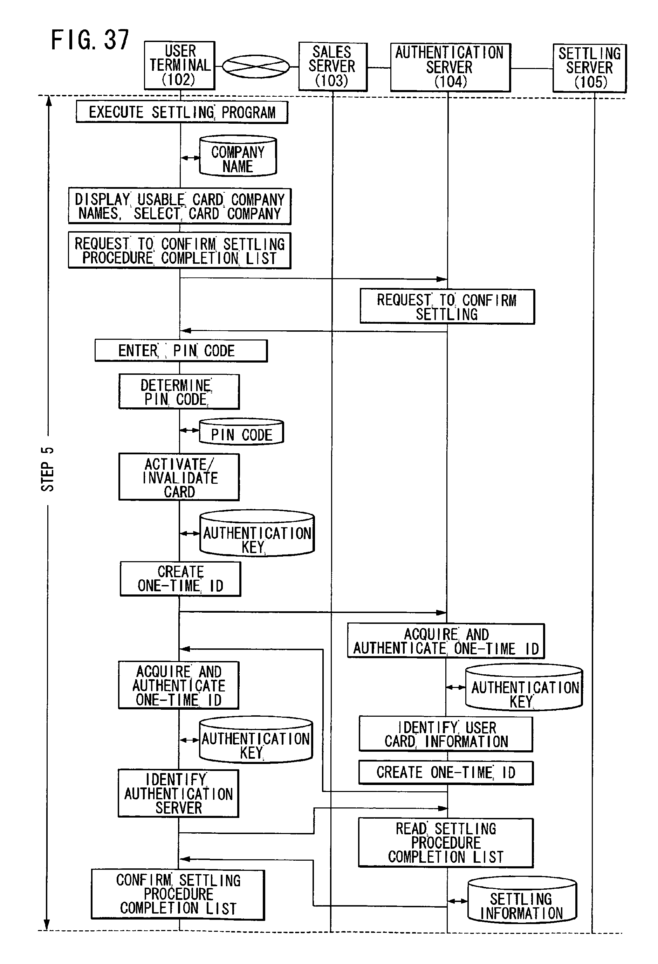

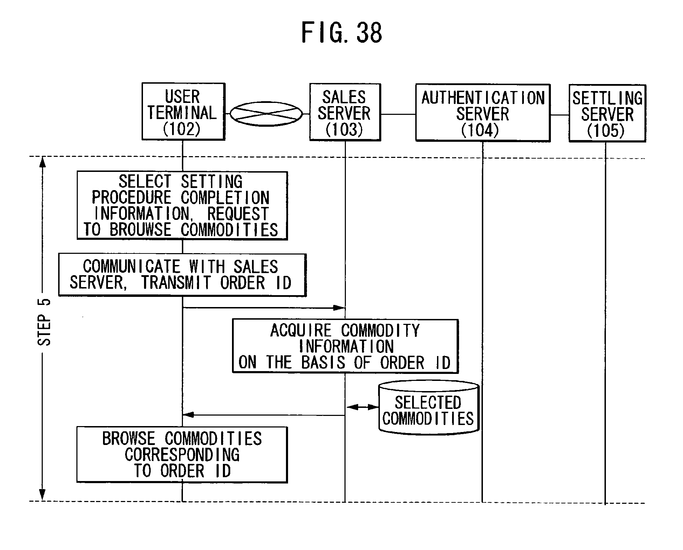

Finally, the confirmation processing of the settling procedure completion information will be described with reference to Figs. 37 and 38. First, the user causes the computer to execute the network settling program in the user terminal 102. Along with this, the card company names usable in the settling procedure, as well as the card company names that the user desires to confirm on the settling procedure, and the like are displayed on the display screen of the user terminal 102. When the user selects the card company name that the user desires to confirm on the settling procedure, the program running in the user terminal 102 searches the server controlled by the selected card company (see Figs. 10, 13), or by the network settling card issuing company (see Figs. 12, 15), or by either the card company or the network settling card issuing company (see Figs. 11, 14). In this way communication is performed between the user terminal 102 and the authentication server 104. Incidentally, the search of the server is determined according to the issue configuration of the network settling program. The authentication server 104 requests the user terminal 102 to activate the network settling card 101 and to transmit a one-time ID. This request is transmitted from the activation request unit 309. The request to perform authentication processing is displayed on the display screen of the user terminal 102, in response to which the user enters a pin code for activating the network settling program by the mouse and button of the user terminal 102. According to the entry, the network settling program determines whether the pin code is valid. In the network settling program, the determination of the validity is made by the pin code determination unit 206 of the active state controller 201, using the pin code managed by the pin code storage unit 204. When it is determined that the pin code is valid, the activation processing is performed and the one-time ID is created using the authentication key managed being associated with the selected card company name. In the network settling program, the activation processing is processed by the activation processing unit 207 of the active state controller 201. While the one-time ID is created using the authentication key that is associated with the selected card company name and is managed by the authentication key storage unit 209 of the authentication processing unit 202. The created one-time ID is transmitted to the authentication server 104 from the user terminal 102. At this time, it may be possible that the one-time ID created in the user terminal 102 is displayed on the display screen and is transmitted to the authentication server 104 by the mouse and button of the user terminal 102. Alternatively, the one-time ID may be automatically transmitted to the authentication server 104, without being displayed on the display screen. When it is determined that the pin code is invalid, the activation processing is not performed and the one-time ID is not created.

Upon receiving the one-time ID transmitted from the user terminal 102, the authentication server 104 performs authentication processing for authenticating the user card information. In the authentication server 104, the authentication processing is performed with respect to the one-time ID entered to the card information identification unit 312 of the user card authentication processing unit 302, using the authentication key managed by the authentication key storage unit 311. By authenticating the user card information, the authentication server 104 can acquire "Settling procedure completion information" using the relevant card information. In other words, the authentication server 104 can acquire the list of the data on which the settling procedure is completed, and in which "Sum of selected commodities", "Order ID", "Current time", "Sales server ID" and the like are associated with each other.

In the authentication server 104, a one-time ID is created using the authentication key that was used for authentication of the one-time ID transmitted from the user terminal 102. In the authentication server 104, the one-time ID is created using the authentication key that was used for the authentication in the card information identification unit 312. The created one-time ID is transmitted to the user terminal 102, and is entered to the network settling program running therein. At this time, it may be possible that the one-time ID entered to the network settling program is displayed on the display screen of the user terminal 102 and is entered to the network settling program by the mouse and button. Alternatively, the one-time ID may be automatically entered to the network settling program, without being displayed no the display screen.

Upon acquisition of the one-time ID, the network settling program in the user terminal 102 performs authentication processing for authenticating the authentication server 104. In the network settling program, similarly to the processing performed in the authentication server 104, the authentication processing is performed with respect to the one-time ID entered to the server authentication unit 213 of the authentication processing unit 202, using the authentication key managed by the authentication key storage unit 209. When the authentication server 104 is authenticated, the bidirectional one-time ID authentication is done between the authentication server 104 and the network settling program running in the user terminal 102. Thus it is possible to mutually verify the validity on the user side and the server side, thereby making it possible to protect information on both sides.

When the bidirectional authentication is completed, the user request a list of "Settling procedure completion information" acquired as described above, to the authentication server 104 through the user terminal 102. At this time, it may be possible that the request of the list from the user terminal 102 is displayed on the display screen and is transmitted to the authentication server 104 by the mouse and button of the user terminal 102. Alternatively, the request may be automatically transmitted to the authentication server 104, without being displayed on the display screen. In response to the request, the authentication server 104 transmits the list of "Settling procedure completion information" to the user terminal 102. The list of "Settling procedure completion information" is displayed on the display screen of the user terminal 102, in which the user selects "Settling procedure completion information" that the user desires to confirm by the mouse and button of the user terminal 102. Along with this, communication with the sales server 103 by which the commodities were sold is performed. As described above, "Settling procedure completion information" is the data in which "Sum of selected commodities", "Order ID", "Current time", "Sales server ID" and the like are associated with each other. Upon selection of "Settling procedure completion information" that the user desires to confirm, a link is provided to the sales server 103 on the basis of "Sales server ID", and communication is performed. The sales server 103 acquires the commodity information that is associated with the order ID and registered at the time of the purchase commodity selection, on the basis of the transmitted "Order ID". The sales server 103 transmits the acquired commodity information to the user terminal 102. Then "Commodity information" on which the user has performed the settling procedure is displayed on the display screen of the user terminal 102. The user can confirm the commodity detail information on which the settling procedure is completed. In this way the confirmation processing of the settling procedure completion information is completed.

As described above, in the shopping system through the network, according to the embodiment, the one-time ID can be created using the authentication key included in the network settling program, by setting the network settling program to the user terminal, such as a desktop computer, a notebook computer, a mobile computer, or a mobile phone, and by causing the computer of the terminal to execute the program while the server side can authenticate the information of the card to be used by the user in the settling procedure, using the authentication key managed by the server. For this reason it is possible to save the trouble of notifying the user card information, the personal information, and the like on the user side. In addition, the information is not leaked or stolen on the network, so that the user can use the system with ease and confidence. Even if the one-time ID is leaked or stolen on the network and such a one-time ID is used, it is possible to prevent impersonation as the one-time ID is the one-time identification information that is difficult to be predicted. Further, by performing the bidirectional one-time ID authentication that authenticates not only the user card information on the server side but also the server on the user side, it is possible to mutually verify the validity on the user side and the server side, thereby making it possible to protect information on both sides.

Incidentally in the description of the embodiment, the purchase commodity selection processing performed between the user terminal 102 and the sales server 103 is operated online. However the processing can also be operated offline. When it is operated offline, the sales server 103 notifies the user terminal 102 and the authentication server 104, of the data in which "Selected card company name", "Order ID", "Sales server ID" and the like are associated with each other. In this way the user terminal 102 communicates with the authentication server 104. Thus the user card authentication processing can be processed after the purchase commodity selection processing.

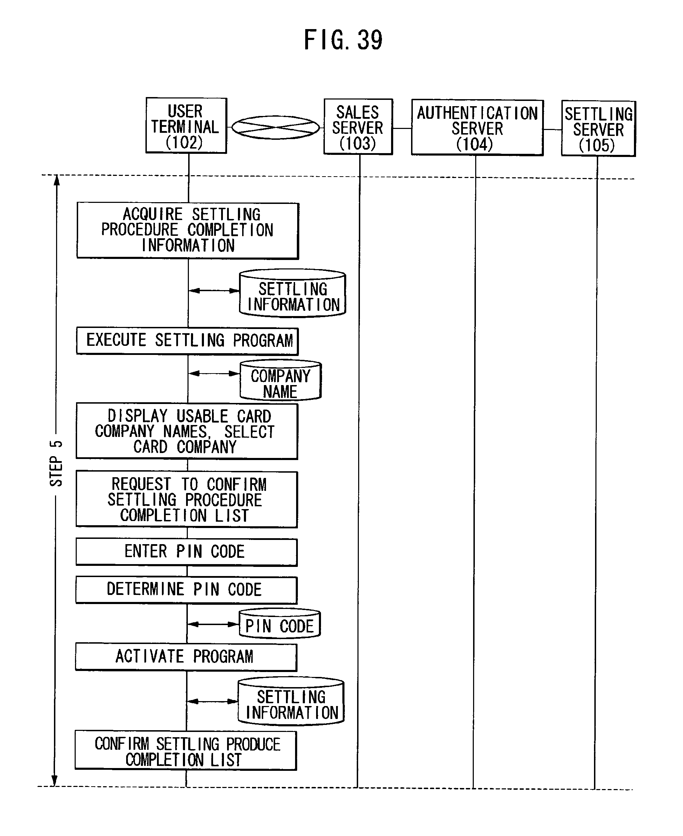

Further, in the description of the embodiment, it is assumed that "Settling procedure completion information" is managed by the authentication server 104. However it may also be possible that "Settling procedure completion information" is transmitted to the user terminal 102, together with the notification of the settling procedure completion, and is recorded therein (see Fig. 39). In other words, when "Settling procedure completion information" is managed in the network settling program, the user can confirm the commodity detail information by causing the computer of the user terminal 102 to execute the network settling program, displaying the list of "Settling procedure completion information", and acquiring the commodity detail information that the user desires to browse from the list, on the basis of the sales server ID, the order ID, and the like (see Fig. 38). When "Settling procedure completion information" is managed by other than the network settling program in the user terminal 102, the user can confirm the commodity detail information by just displaying the list on the display screen, and acquiring the commodity detail information that the user desires to browse from the list, on the basis of the sales server ID, the order ID, and the like.

Further in the embodiment, when the computer of the user terminal 102 executes the program of the network settling card 101, the program is activated in such a way that the pin code entered by the user is authenticated with the pin code managed by the pin code storage unit 204. However, similarly to the first embodiment, it may also be possible that the active state controller is provided in the authentication server 104 instead, in the network settling program, to manage the pin code to activate the network settling program for each network settling program or for the information of each card to be used in the settling procedure.

Further, in the embodiment, the bidirectional one-time ID authentication is performed only between the user terminal 102 and the authentication server 104. However the bidirectional one-time ID authentication may be performed in communications between the respective servers. In this way it is possible to implement a network between the sales server 103 and the authentication sever 104, or between the settling server 105 and the authentication server 104, through the Internet. Incidentally, in the description of the embodiment, the commodity sum information is transmitted from the sales server 103 to the authentication server 104 for the purpose of notifying only the sum of the ordered commodities. However, the commodity sum information may be used to notify the names, prices, and the like of the commodities.

In the embodiment there is no description about the case in which a time-out occurs between the terminal and the servers. However the network settling program would become invalid due to a wrong pin code entered on the user side. As described above when the following processing is prevented from being performed in the system, the time-out may occur. In such a case, it is necessary to return to the step of the purchase commodity selection processing as the first step, and to perform the processing again.

### (Embodiment 3)

Hereinafter a third embodiment of the present invention will be described. The first and second embodiments have described an example in which the user uses a virtual shop through a network. The present embodiment will describe an example in which the user uses an actual shop.

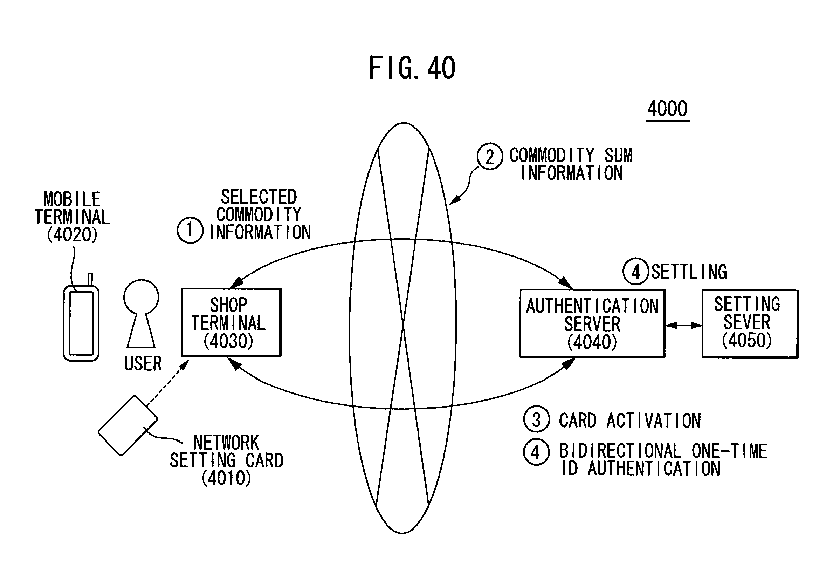

First the general configuration of the shopping system will be described. As shown in Fig. 40, the configuration of a shopping system 4000 is roughly divided into the user side and the server side. The user side includes: a network settling card 4010 in which the network settling program is recorded, or a mobile terminal 4020 such as a mobile computer or mobile phone in which the program is set; and a shop terminal 4030 for performing communication through a network by executing the network settling card 4010 or the network settling program in the mobile terminal 4020. The server side includes: an authentication server 4040 for communicating with the shop terminal 4030, acquiring a one-time ID created by the network settling program as well as the sum information of commodities selected by the user from the shop terminal 4030, acquiring the information of a card to be used by the user in the settling procedure on the basis of the one-time ID, and acquiring the user settling information including the sum information of the commodities and the card information; and a settling server 4050 for performing the settling procedure on the commodities selected by the user by acquiring the user settling information from the authentication server 4040. The shop terminal 4030 is a terminal used in an actual shop. An employee or staff member of the shop receives the network settling card 4010 or the mobile terminal 4020 from the user, and causes a computer of the shop terminal 4030 to execute the network settling program managed in the network settling card or in the mobile terminal. Incidentally, the authentication server 4040 and the settling server 4050, which are provided in the server side, may be physically integral or separate from each other. The network settling program managed in the network settling card 4010 or in the mobile terminal 4020, has the same configuration as that of the program managed in the network settling card 101 shown in Fig. 2. Also the authentication server 4040 and the settling server 4050 have the same configurations as those described above. Thus a repeated description will be omitted.

Next a description will be made of the processing operation of the shopping system configured as described above. Basically the overall processing is substantially the same as the flow described in the first and second embodiments. In the initial processing as the preparation step, the user acquires the network settling card 4010, or the user acquires the network settling program and sets it to the mobile terminal 4020. In the purchase commodity selection processing as the first step, the user selects commodities to purchase in the shop, and indicates his or her intention to settle the bill for the commodities by network payment, to the employee or staff member of the shop. The user card authentication processing as the second step and the settling procedure processing as the final step, are performed using the shop terminal 4030, the authentication server 4040, and the settling server 4050.

The initial processing as the preparation step will be described. On the user side, the user acquires the network settling card 4010, or the user acquires the network settling program and sets it to the mobile terminal 4020, before using the shopping system. As described in the first and second embodiments, the acquisition/setting means of the network settling card or program includes that the user asks a card company managing the credit card or bank card that the user has registered, to issue a network settling card or program, or that the user asks the company issuing the network settling card/program to issue a network settling card or program. In both cases, it is necessary to notify the card information such as the card ID and code number of the credit card or bank card that the user has registered, as well as the user personal information. The card company or company issuing the network settling card/program creates an authentication key for authenticating the information of the card to be used by the user in the settling procedure, on the basis of the notified card information, and registers the created authentication key to the network settling card/ program, and then issues to the user. In the former case, only the same company can be registered in the network settling card/program. In the latter case, different card companies can be registered in the network settling card/program. Incidentally, for example, the means of issuing to the user is to transmit the network settling program by e-mail or other electronic means through the network, or to mail the network settling program stored in an IC card or a memory medium. When acquiring the network settling program from the network or being stored in the memory medium, the user sets the program to the mobile terminal 4020. When acquiring the network settling program stored in the IC card, the user uses it as the network settling card 4010 (see Figs. 3, 33).

The network settling program is normally set to an inactive state. In order to set the network settling program to an active state, it is necessary to enter the same pin code as the pin code registered in the pin code storage unit 205 of the program. The pin code registered in the pin code storage unit 205 shall be registered by either the user or the issuing company of the program. However, when the pin code is biometric information, the user needs to register his or her biometric information.

On the server side, the authentication server 104 needs to manage the authentication key that can authenticate the information of the card to be used by the user in the settling procedure, from the one-time ID transmitted from the shop terminal 4030, using the network settling program. In other words, it is necessary to manage the authentication key for the information of each card. The settling server 4050 manages the card information such as the company name, ID, and code number of the card that the user has, as well as the user personal information, by associating with each other. The card information and the user personal information were notified by the user for acquiring the credit card or bank card, or for acquiring the network settling program. By performing the above described processing in the preparation step, the shopping system can be used. These are the same as those described in the first and the second embodiments.

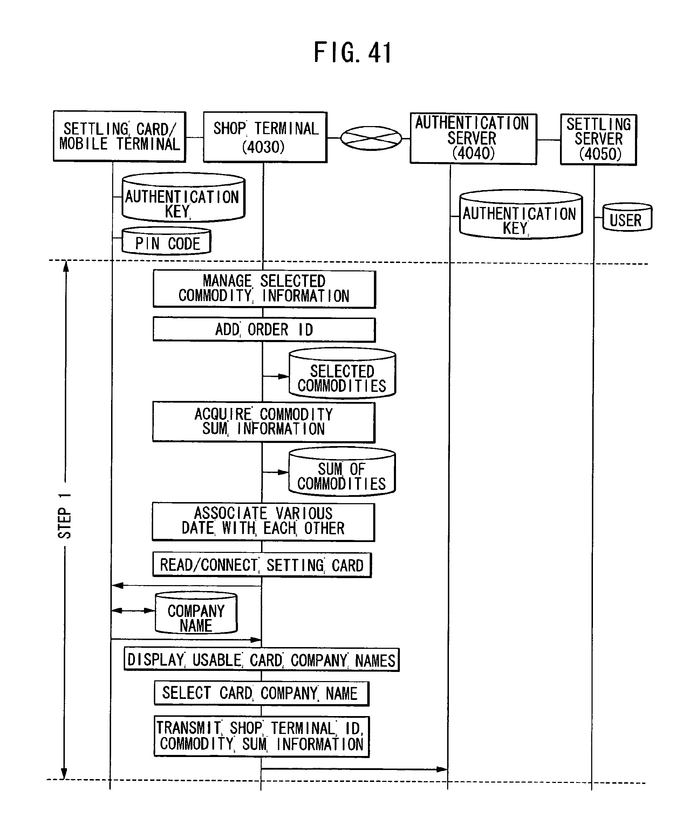

Next the purchase commodity selection processing as the first step will be described with reference to Fig. 41. In step 1, the user selects commodities to purchase in the shop, and indicates his or her intention to pay for the commodities by network payment to the employee or staff member of the shop. According to the user's intention, the shop terminal 4030 creates an order ID on the commodity information that the user indicates the intention as well as for the sum thereof. The shop terminal 4030 manages various types of information such as "User selected commodity information", "Sum of selected commodities", and "Order ID", by associating with each other (see Fig. 17).

Next, the employee or staff member of the shop receives the network settling card 4010 or the mobile terminal 4020 from the user, and causes the computer of the shop terminal 4030 to execute the network settling program managed in the network settling card or the mobile terminal. Along with this, of the card companies managed in the shop terminal 4030 and of the card companies managed in the network settling program, the card companies usable in the settling procedure are displayed on a display screen of the shop terminal 4030. More specifically, when the card companies a to f are managed by the shop terminal 4030 and the card companies a, b, e, h are managed in the network settling program, the card companies a, b, e are displayed on the display screen of the shop terminal 4030. Examples of the display configuration of the card companies usable in the settling procedure are that the usable card companies are highlighted as shown in Figs. 19 and 20, or that a selection screen of the usable card companies is newly created as shown in Figs. 21 and 22. When the user confirms this and selects "Card company a", the employee or staff member of the shop performs selection operation by the mouse and button of the shop terminal 4030. Upon selection of the card company name to be used in the settling procedure, the shop terminal 4030 manages "Current time", "Selected card company name", "Shop terminal ID" and the like by associating with each other, in addition to the various types of information associated with each other and managed as described above. Here "Shop terminal ID" is an identifier for identifying the relevant shop terminal. Then the shop terminal 4030 communicates with the authentication server 4040 that manages the selected card company. Incidentally, the authentication server 4040 is controlled by the card company (see Figs, 10, 13), or by the network settling card/program issuing company (see Figs. 12, 15), or by either the card company or the network settling card/program issuing company (see Figs. 11, 14). Then the shop terminal 4030 transmits "Sum of selected commodities", "Order ID", "Current time", and "Shop terminal ID", which are associated with the commodity information selected by the user and managed therein, to the authentication server 4040. At this time, communication is performed between the shop terminal 4030 and the authentication server 4040. In this way the purchase commodity selection processing is completed.

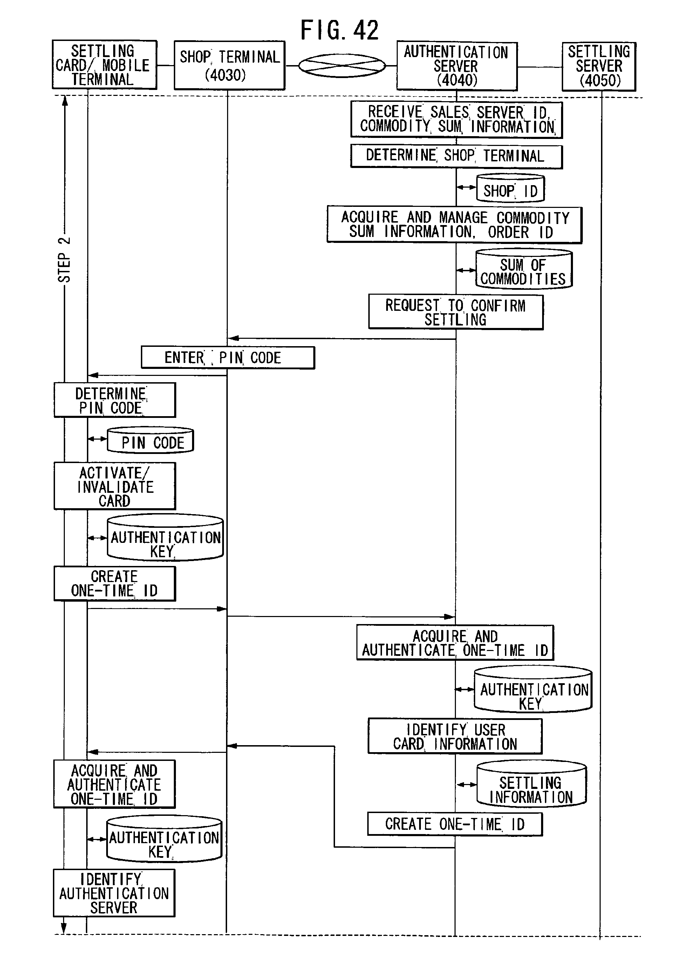

Next the user card authentication processing as the second step will be described with reference to Fig. 42. Upon acquisition of the data in which "Sum of selected commodities", "Order ID", "Current time", "Shop terminal ID" and the like are associated with each other, in step 2, the authentication server 4040 determines whether the "Shop terminal ID" is valid. In the authentication server 4040, the determination of the validity of the server is made by a shop terminal determination unit (equivalent to the sales server determination unit 306 shown in Fig. 31) using the ID managed by a shop terminal ID storage unit (equivalent to the sales server ID storage unit 307 shown in Fig. 31). When it is determined that the shop terminal 4030 is valid, the above described information is acquired. In the authentication server 4040, the information is acquired by the commodity sum information acquisition unit 308 and is entered to the user settling information acquisition unit 315. Then the authentication server 4040 requests the shop terminal 4030 to activate the network settling program and to transmit a one-time ID. This request is transmitted from the activation request unit 309. The request to perform authentication processing is displayed on the display screen of the shop terminal 4030, in response to which the user enters a pin code to activate the network settling program by the mouse and button of the shop terminal 4030 (see Figs. 24, 25). According to the entry, the pin code determination unit 206 of the active state controller 201 of the network settling program determines with the pin code managed by the pin code storage unit 204. When it is determined that the pin code is valid, the activation processing is performed and a one-time ID is created using the authentication key that is associated with the card company name the user selected for the settling procedure. In the network settling program, the activation processing is processed by the activation processing unit 207 of the active state controller 201 while the one-time ID is created using the authentication key that is associated with the card company name selected by the user and is managed by the authentication key storage unit 209 of the authentication processing unit 202. The created one-time ID is transmitted to the authentication server 4040 through the shop terminal 4030. At this time, it may be possible that the one-time ID entered to the shop terminal 4030 is displayed on the display screen and is transmitted to the authentication server 4040 by the mouse and button of the shop terminal 4030. Alternatively, the one-time ID may be automatically transmitted to the authentication server 4040, without being displayed on the display screen. When it is determined that the pin code is invalid, the activation processing is not performed and the one-time ID is not created.

Upon receiving the one-time ID transmitted from the shop terminal 4030, the authentication server 4040 performs processing for authenticating the information of the card to be used by the user in the settling procedure. In the authentication server 4040, the authentication processing is performed with respect to the one-time ID entered to the card information identification unit 312 of the user card authentication processing unit 302, using the authentication key managed by the authentication key storage unit 311. By authenticating the user card information, the authentication server 4040 can acquire "Card information" such as the card ID and code number. Then by entering the acquired "Card information" to the user settling information acquisition unit 315, the authentication server 4040 can acquire the user settling information, together with the previously acquired data in which "Sum of selected commodities", "Order ID", "Current time", "Shop terminal ID" and the like are associated with each other. The authentication server 4040 temporarily maintains such information (see Fig. 26).

While in the authentication server 4040, a one-time ID is created using the authentication key that was used for authentication of the one-time ID transmitted from the shop terminal 4030. In the authentication server 4040, the one-time ID is created using the authentication key that was used for the authentication in the card information identification unit 312. The created one-time ID is transmitted to the shop terminal 4030. Then the shop terminal 4030 performs authentication processing for authenticating the authentication server 4040 by the network settling program. At this time, it may be possible that the one-time ID entered to the shop terminal 4030 is displayed on the display screen to execute the network settling program by the mouse and button of the shop terminal 4030. Alternatively, the network settling program may be automatically executed without the one-time ID being displayed on the display screen.

Similarly to the processing performed by the authentication server 4040, the authentication processing is performed with respect to the one-time ID entered to the server authentication unit 213 of the authentication processing unit 202, using the authentication key managed by the authentication key storage unit 209. When the authentication server 4040 is authenticated, the bidirectional one-time ID authentication is done between the network settling program and the authentication server 4040. Thus it is possible to mutually verify the validity on the user side and the server side, thereby making it possible to protect information on both sides. In this way the user card authentication is completed.

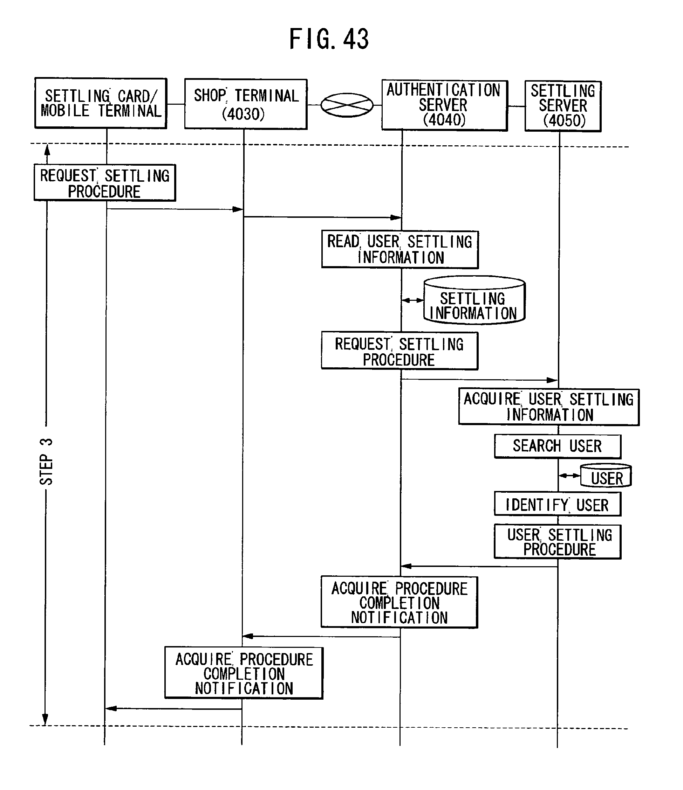

The settling procedure processing as the final step will be described with reference to Fig. 43. Upon completion of the authentication processing of the authentication server 4040 in the shop terminal 4030, in step 3, the user requests a settling procedure processing to the authentication server 4040 by the network settling program running in the shop terminal 4030. At this time, it may be possible that the settling procedure request entered to the shop terminal 4030 is displayed on the display screen, and is transmitted to the authentication server 4040 by the mouse and button of the shop terminal 4030. Alternatively, the settling procedure request may be automatically transmitted to the authentication server 4040, without being displayed on the display screen.

Upon receiving the settling procedure request transmitted from the shop terminal 4030, the authentication server 4040 performs the settling procedure request to the settling server 4050 by the maintained user settling procedure information (see Fig. 28). In the authentication server 4040, the settling procedure request reception unit 316 receives the settling procedure request, and enters the user settling information temporarily maintained by the user information acquisition unit 315 into the settling procedure request unit 318. The settling procedure request unit 318 performs the settling procedure request to the settling server 4050 by transmitting the user settling information thereto. The user settling information is also registered in the user settling information storage unit 317.

Upon receiving the user settling information, the settling server 4050 performs the settling procedure on the commodities selected by the user. As described above, the user settling information is the information in which "Sum of selected commodities", "Order ID", "Current time", "Shop terminal ID, "Card information" and the like are associated with each other. The settling server 4050 authenticates "Card information" included in the received user settling information, using "Card information" managed by the relevant server. In this way the settling server 4050 can identify the user card information, and can perform the settling procedure on the commodities selected by the user. The credit card company or the card company such as the bank company, which controls the settling server 4050, performs a billing procedure for the user identified on the basis of "Card information" included in the user settling information, while performing a payment procedure for the shop that controls the shop terminal 4030 identified on the basis of "Shop terminal ID" included in the user settling information. Upon completion of the settling procedure, the settling server 4050 transmits "Settling procedure completion information" with a flag "Done" indicating that the procedure is completed, to the authentication server 4040 (see Fig. 29). Similarly to the user settling information, "Settling procedure completion information" is the data including "Sum of selected commodities", "Order ID", "Current time", "Shop terminal ID" and the like. In the authentication server 4040, "Settling procedure completion information" is acquired by the settling procedure completion notification acquisition unit 319, and is managed by the user settling information storage unit 317. The user settling information has been registered in the user settling information storage unit 317. Thus when the user settling information storage unit 317 acquires "Settling procedure completion information", the authentication server 4040 can determine that the settling procedure on the relevant order ID is completed. Then the authentication server 4040 transmits that the settling procedure is completed, to the network settling program running in the shop terminal 4030. In this way the settling procedure processing is completed, and all the processing of the shopping system is completed.

Incidentally, the confirmation processing of the settling procedure completion information is generally performed by the user terminal 102 or the mobile terminal 4020, but it may also be performed by the shop terminal 4030. The processing is the same as described in the first and second embodiments.

According to the embodiment, the one-time ID can be created using the authentication key included in the network settling program, in such a way that the user carries the network settling card in which the network settling program is recorded or the mobile terminal in which the program is set, to an actual shop, selects commodities, and causes the network settling program to be executed by the terminal in the shop. The server side can authenticate the information of the card to be used by the user in the settling procedure, with respect to the one-time ID, using the authentication key managed by the server. For this reason it is possible to save the trouble of notifying the user card information, the personal information, and the like on the user side. In addition, the information is not leaked or stolen on the network, so that the user can use the system with ease and confidence. Even if the one-time ID is leaked or stolen on the network and such a one-time ID is used, it is possible to prevent impersonation as the one-time ID is the one-time identification information that is difficult to be predicted. Further by performing the bidirectional authentication that authenticates not only the user card information on the server side but also the server on the user side, it is possible to mutually verify the validity on the user side and the server side, thereby making it possible to protect information on both sides.

Further in the embodiment, when the computer of the shop terminal 4030 executes the network settling program, the program is activated in such a way that the pin code entered by the user is authenticated with the pin code managed by the pin code storage unit 204. However, similarly to the first and second embodiments, it may also be possible that the active state controller is provided in the authentication server 4040, not in the program, to manage the pin code to activate the network settling card 101 for each network settling card 101 or for the information of each card to be used in the settling procedure.

Further in the embodiment, the bidirectional one-time ID authentication processing is performed only between the shop terminal 4030 and the authentication server 4040. However, the bidirectional one-time ID authentication may be performed in communication between the respective servers. In this way it is possible to implement a network between the settling server 4050 and the authentication sever 4040 through the Internet. Incidentally in the description of the embodiment, the commodity sum information is transmitted from the shop terminal 4030 to the authentication server 4040 for the purpose of notifying only the sum of the ordered commodities. However, the commodity sum information may be used to notify the names, prices and the like of the commodities.

In the embodiment, similarly to in the first and second embodiments, there is no description about the case in which a time-out occurs between the terminal and the servers. However the settling card 101 would become invalid due to a wrong pin code entered on the user side. As described above when the following processing is prevented from being performed in the system, the time-out may occur. In such a case, it is necessary to return to the step of the purchase commodity selection processing as the first step, and to perform the processing again.

As apparent from the foregoing description, according to the present invention, when the user selects and purchases a commodity provided by the server in the shopping network through the network, it is possible to process the settling procedure without the user entering the personal information, the card information, and the like. For this reason such information is not leaked on the network, providing excellent usability and safety. This prevents someone impersonating a third party from using such information, so that the user does not suffer any loss. Thus the settlement means using a credit card, a bank card, and the like can be expected to be widespread.

## Claims

1. A network settling card comprising an authentication processing unit for performing authentication processing using an authentication key created on the basis of the information of a card to be used in a settling procedure,
wherein the authentication processing unit performs a settling procedure on a commodity selected by a user, by creating a one-time ID by the authentication key, by acquiring a one-time ID created by an authentication server for authenticating the one-time ID, and by authenticating the authentication server by the authentication key.

2. The network settling card according to claim 1,
wherein the authentication processing unit manages the authentication key and the company name of the card that the user registered, by associating with each other.

3. The network settling card according to claim 1, further comprising an active state controller for managing the active state of the network settling card,
wherein the active state controller determines a pin code entered by the user, using a pin code managed by the active state controller, and activates or inactivates the network settling card according to a determination result.

4. The network settling card according to claim 3,
wherein the pin code is a password set by the user of the network settling card.

5. The network settling card according to claim 3,
wherein the pin code is biometric information of the user of the network settling card.

6. The network settling card according to claim 1,
wherein, after authentication of the authentication server, the authentication processing unit requests settling procedure processing to the authentication server, acquires a notification of the settling procedure processing from the authentication server, and recodes the acquired information.

7. The network settling card according to claim 1,
wherein the network settling card is constructed in the form of an IC card or a USB memory.

8. A network settling program for causing a computer to execute a process, comprising:
performing authentication processing using an authentication key created on the basis of the information of a card to be used in a settling procedure;
creating a one-time ID by the authentication key;
acquiring a one-time ID created by an authentication server for authenticating the one-time ID; and
authenticating the authentication server by the authentication key.

9. The network settling program according to claim 8, further comprising:
managing the active state of the network settling program;
determining a pin code entered by a user, using a pin code managed by the program; and
activating or inactivating the network settling program according to a determination result.

10. The network settling program according to claim 9,
wherein the pin code is a password set by the user of the network settling card.

11. The network settling program according to claim 9,
wherein the pin code is biometric information of the user of the network settling card.

12. The network settling program according to claim 8, further comprising:
after authentication of the authentication server, requesting settling procedure processing to the authentication server; and
acquiring a notification of the settling procedure processing from the authentication server, and recording the acquired information.

13. A settling method for performing bidirectional one-time ID authentication, comprising the steps of:
performing communicating between a user terminal and a server, and causing a user to select a commodity displayed in the user terminal;
displaying a method of a settling procedure on the selected commodity, and causing the user to select therefrom;
when the user selects a network settling card or a network settling program for the method of the settling procedure, causing the network settling card or the network settling program to be read;
causing the user to select a card company usable in the settling procedure, from selectable card companies managed in the server and from selectable card companies managed in the network settling card or in the network settling program;
displaying a request to perform authentication processing with the server, and causing the user to execute the request; and
displaying a request to perform settling procedure processing with the server, and causing the user to execute the request,
wherein upon execution of the authentication processing, the network settling card or the network settling program creates a one-time ID by an authentication key created on the basis of the information of the card to be used in the settling procedure, and transmits the created one-time ID to the authentication server, and
the server identifies the information of the card to be used by the user in the settling procedure by authenticating the transmitted one-time ID by the authentication key created on the basis of the card information, creates a one-time ID by the authentication key that was used for the authentication, and transmits the created one-time ID to the user terminal.

14. A settling method for performing bidirectional one-time ID authentication, comprising the steps of:
performing communication between a shop terminal and a server, and causing the shop terminal to read a network settling card to be used in a settling procedure on a commodity selected by a user;
causing the user to select a card company usable in the settling procedure, from selectable card companies managed in the server and from selectable card companies managed in the network settling card;
displaying a request to perform authentication processing with the server, and causing the user to execute the request; and
displaying a request to perform settling procedure processing with the server, and causing the user to execute the request,
wherein upon execution of the authentication processing, the network settling card or the network settling program creates a one-time ID by an authentication key created on the basis of the information of the card to be used in the settling procedure, and transmits the created one-time ID to the server, and
the server identifies the information of the card to be used by the user in the settling procedure by authenticating the transmitted one-time ID by the authentication key created on the basis of the card information, creates a one-time ID by the authentication key that was used for the authentication, and transmits the created one-time ID to the shop terminal.

15. The settling method according to claim 13 or 14,
wherein the selection of the commodity, selection of the method of the settling procedure, selection of the card company to be used in the settling procedure, execution of the authentication processing, and execution of the settling procedure processing are made by mouse operation or button operation.

16. The settling method according to claim 13 or 14,
wherein execution of the authentication processing and execution of the settling procedure processing are automatically performed.

17. An authentication server comprising:
a commodity sum information management unit for acquiring the sum information of a commodity selected by a user in a user terminal in a shopping system through a network, from a sales server for selling commodities;
a user card authentication processing unit for authenticating the information of a card to be used by the user in a settling procedure, with respect to a one-time ID transmitted from the user terminal, using an authentication key created on the basis of the card information; and
a user settling procedure controller for performing the settling procedure by acquiring the user settling information from the acquired sum information of the commodity and from the authenticated information of the card to be used by the user in the settling procedure.

18. The authentication server according to claim 17,
wherein the user card authentication processing unit creates a one-time ID by the authentication key that was used for authentication of the information of the card used by the user in the settling procedure, and transmits the created one-time ID to the user terminal.

19. The authentication server according to claim 17, further comprising an active state controller for managing the active state of the network settling card,
wherein the active state controller determines a pin code entered by the user, using a pin code managed by the active state controller, and activates or inactivates the network settling card according to a determination result.

20. A shopping system comprising:
a network settling card for performing a settling procedure on a commodity selected by a user;
a user terminal for performing communication through a network by executing a network settling program of the network settling card;
a sales server for communicating with the user terminal to sell commodities;
an authentication server for communicating with the sales server, acquiring the sum information of the commodity selected by the user from the sales server, while communicating with the user terminal, acquiring the information of the card to be used by the user in the settling procedure from a one-time ID transmitted from the user terminal, and acquiring the user settling information including the sum information of the commodity as well as the card information; and
a settling server for performing the settling procedure of the commodity selected by the user by acquiring the user settling information from the authentication server,
wherein, after authentication of the information of the card to be used by the user in the settling procedure from the one-time ID, the authentication server creates a one-time ID by the authentication key that was used for the authentication, and transmits the created one-time ID to the network settling program running in the user terminal, and
after authentication of the authentication server, the network settling program requests the authentication server to perform the settling procedure on the commodity through the user terminal.

21. A shopping system comprising:
a network settling program for performing a settling procedure on a commodity selected by a user;
a user terminal in which the network settling program is set to perform communication through a network;
a sales server for communicating with the user terminal to sell commodities;
an authentication server for communicating with the sales server, acquiring the sum information of the commodity selected by the user from the sales server, while communicating with the user terminal, acquiring the information of the card to be used by the user in the settling procedure from a one-time ID transmitted from the user terminal, and acquiring the user settling information including the sum information of the commodity as well as the card information; and
a settling server for performing the settling procedure on the commodity selected by the user by acquiring the user settling information from the authentication server,
wherein, after authentication of the information of the card to be used by the user in the settling procedure from the one-time ID, the authentication server creates a one-time ID by the authentication key that was used for the authentication, and transmits the created one-time ID to the network settling program running in the user terminal, and
after authentication of the authentication server, the network settling program requests the authentication server to perform the settling procedure on the commodity through the user terminal.

22. A shopping system comprising:
a network settling card or a mobile terminal, in which a network settling program for performing a settling procedure on a commodity selected by a user is recorded;
a shop terminal for performing communication through a network by executing the network settling program of the network settling card or of the mobile terminal;
an authentication server for communicating with the shop terminal, acquiring a one-time ID created by the network settling program as well as the sum information of the commodity selected by the user from the shop terminal, acquiring the information of the card to be used by the user in the settling procedure on the basis of the one-time ID, and acquiring the user settling information including the sum information of the commodity as well as the card information; and
a settling server for performing the settling procedure on the commodity selected by the user by acquiring the user settling information from the authentication server,
wherein, after authentication of the information of the card to be used by the user in the settling procedure from the one-time ID, the authentication server creates a one-time ID by the authentication key that was used for the authentication, and transmits the created one-time ID to the network settling program running in the shop terminal, and
after authentication of the authentication server, the network settling program requests the authentication server to perform the settling procedure on the commodity through the shop terminal.

23. The shopping system according to claim 20,
wherein, after performing the settling procedure on the commodity, the settling server notifies the network settling program of the content of the settling procedure through the authentication server, and
the network settling program records the content of the settling procedure.

24. The shopping system according to claim 20,
wherein the sales server creates an order ID on the commodity selected by the user, and adds the order ID to the commodity sum information to be transmitted from the sales server to the authentication server, and
the authentication server associates the order ID with the user settling information to be transmitted to the settling server.
